# EUROPEAN PATENT SPECIFICATION

(11) **EP 1 171 295 B1**
(45) Date of publication and mention of the grant of the patent: **17.11.2004**
(21) Application number: 00921570.8
(22) Date of filing: 31.03.2000
(51) Int. Cl.: B32B 27/32, B32B 27/30, B32B 27/12

(54) **MULTILAYER STRUCTURES**
MEHRSCHICHTIGE STRUKTUREN
STRUCTURES MULTICOUCHE

(30) Priority: 01.04.1999 US 127429 P; 30.04.1999 US 131840 P; 17.12.1999 US 172549 P
(43) Date of publication of application: 16.01.2002
(73) Proprietor: Dow Global Technologies, Inc., Midland, Michigan 48674 (US)
(72) Inventor: WEVERS, Ronald, CH-8135 Langnau am Albis (CH); KATZER, Karin, CH-8810 Horgen (CH); BATISTINI, Antonio, CH-8810 Horgen (CH); HERSCHE, Emil, CH-8832 Wollerau (CH); WADDINGTON, Simon, CH-1184 Luins (CH); HILL, Alastair, Midland, MI 48642 (US); KELLEY, Dave, C., Angleton, TX 77515 (US); NG, Stan, New Territories, SAR Hongkong (CN); LEE, Simon, Hsin Dien, Taipei County (TW)
(74) Representative: Raynor, John
(86) International application number: PCT/US2000/008646
(87) International publication number: WO 2000/059723

(56) References cited:
- WO-A-98/10017
- WO-A-99/64500
- WO-A-99/64501

## Description

### BACKGROUND OF THE INVENTION

This invention concerns multilayer structures comprising a fabric and a polymeric layer and methods of preparing them.

Multilayer structures that comprise a fabric and a polymeric layer are generally known in the art. They find wide use where impermeableness to water is desired, for example as water-impermeable covers, such as tablecloths, tarpaulins, tents or water-impermeable clothes, such as raincoats.

Multilayer structures, which contain a woven fabric that is coated with a flexible polyvinyl chloride film, are widely used due to their excellent flexibility and drape properties. However there is an increasing pressure to find more environmentally friendly films for coating fabrics. Polyethylene films are environmentally friendly. U.S. Patent No. 5,795,516 relates to a method of fabricating olefin tarpaulins. However, polyethylene films have failed in several applications due to insufficient drape properties. Good drape properties are often desired, for example for tablecloths or water-impermeable clothes.

Depending on the intended end-use, multilayer structures that comprise a fabric and a polymeric layer should have other properties. Exemplary of other desirable properties is good haptics, such as a leather-like feel. Evidently no single material has such properties that it can fulfill all requirements in the many different applications in which the multilayer structures may be used. Therefore, it would be desirable to increase the variety of multilayer structures that comprise a fabric and a polymeric layer.

Accordingly, one object of the present invention is to provide new multilayer structures, which comprise a fabric and a polymeric layer. A preferred object of the present invention is to provide such multilayer structures that have good drape properties and/or desirable haptics, such as a leather-like feel.

### SUMMARY OF THE INVENTION

One aspect of the present invention is a multilayer structure having a drape angle of at least 35.5 degrees and which comprises
(A) a fabric and
(B) a polymeric layer comprising a substantially random interpolymer comprising in polymerized form i) one or more α-olefin monomers and ii) one or more vinyl or vinylidene aromatic monomers and/or one or more sterically hindered aliphatic or cycloaliphatic vinyl or vinylidene monomers, and optionally iii) other polymerizable ethylenically unsaturated monomer(s); layer (B) being free from a substantial amount of tackifier.

The fibers are selected from wool, cotton, silk, linen, regenerated cellulose, cellulose acetate (known under the trademark Rayon), a polyamide, such as polyamide-6,6, an acrylonitrile homo- or copolymer, known under the trademarks Dralon or Orlon, a polyethylene glycol terephthalate, a polyester, a polyolefin, such as a polyethylene or polypropylene, or a mixture thereof.

Another aspect of the present invention is a method of producing the above-mentioned multilayer structure, which comprises the step of fixing the above-mentioned polymeric layer (B) to a fabric.

Yet another aspect of the present invention are water-impermeable goods made of the above-mentioned multilayer structure.

### SHORT DESCRIPTION OF THE DRAWINGS

Fig. 1 illustrates a method of measuring drape properties.
Fig. 2 illustrates the drape properties of a tablecloth of the present invention.
Fig. 3 illustrates the drape properties of a comparative tablecloth.

### DETAILED DESCRIPTION OF THE INVENTION

The multilayer structure comprises a fabric (A) and a polymeric layer (B) comprising a substantially random interpolymer described further below. By the term "multilayer structure" a structure comprising two or more layers is meant.

The term "comprising' as used herein means "including".

The fabric layer (A) can be woven or non-woven. In non-woven structures the fibers can, for example, be knitted, felted or bonded in any other way to produce a fabric. The fabric layer (A) can be produced from fiber yarns, filament yarns, monofilaments, multifilaments or other fiber materials. Fabrics with smooth surfaces are useful, but the fabrics can also be roughened or slightly structured, as it is for example the case for tufted, fibrous, velvety, napped, brushed or pile surfaces. Textile fabrics with such surfaces are for example velvet, velour, plush, barchant or flannel fabrics. Woven fabrics can be tightly or loosely woven. The term "loosely woven", as used herein relates to a mesh fabric.

The fabric can be made of natural and/or man-made fibers.

The weight of the fabric per square meter can vary in a wide range, however it is generally from 20 to 800 g/m², preferably from 60 to 600 g/m², most preferably from about 80 to about 400 g/m².

The fabric can be subjected to known finishing processes, such as dying, bleaching, impregnating, decreasing flammability, pretreatment with an adhesion or thermofixing agent, or other known processes. Generally the fabric is subjected to one or more finishing processes before or after combining the fabric with a polymeric layer (B) comprising a substantially random interpolymer described below.

The polymeric layer (B) contains one or more substantially random interpolymers comprising in polymerized form i) one or more α-olefin monomers and ii) one or more vinyl or vinylidene aromatic monomers and/or one or more sterically hindered aliphatic or cycloaliphatic vinyl or vinylidene monomers, and optionally iii) other polymerizable ethylenically unsaturated monomer(s). Layer (B) does not include a substantial amount of a tackifier as defined in the International Patent Application with the publication No. WO 98/10017. If layer (B) includes a tackifier at all, its amount is less than 5 percent, preferable less than 2 percent, more preferably less than 1 percent, based on the total amount of tackifier and substantially random interpolymer described below. If the multilayer structure comprises several layers that include an above-mentioned substantially random interpolymer, at least one of these layers does not include a substantial amount of a tackifier. The term "tackifier" as used herein means a resin useful to raise the glass transition temperature of the substantially random interpolymer by at least 5°C and/or to impart tack to a hot-melt adhesive, which comprises the substantially random interpolymer. The term "tack" is used herein according to ASTM D-1878-61T, which defines tack as "the property of a material that enables it to form a bond of measurable strength immediately on contact with another surface. Tackifiers are for example wood rosin, gum, tall oil, tall oil derivatives, cyclopentadiene derivatives, aliphatic C₅ resins, polyterpene resins, hydrogenated resins, rosin esters, natural and synthetic terpenes, terpene-phenolics, and hydrogenated rosins. The tackifiers are described in WO 98/10017, from page 15, third paragraph, to page 16, third paragraph.

The term "interpolymer" is used herein to indicate a polymer wherein at least two different monomers are polymerized to make the interpolymer.

The term "substantially random" in the substantially random interpolymer resulting from polymerizing i) one or more α-olefin monomers and ii) one or more vinyl or vinylidene aromatic monomers and/or one or more sterically hindered aliphatic or cycloaliphatic vinyl or vinylidene monomers, and optionally iii) other polymerizable ethylenically unsaturated monomer(s) as used herein generally means that the distribution of the monomers of said interpolymer can be described by the Bernoulli statistical model or by a first or second order Markovian statistical model, as described by J. C. Randall in POLYMER SEQUENCE DETERMINATION. Carbon-13 NMR Method, Academic Press New York, 1977, pp. 71-78. Preferably, the substantially random interpolymer resulting from polymerizing one or more α-olefin monomers and one or more vinyl or vinylidene aromatic monomers, and optionally other polymerizable ethylenically unsaturated monomer(s), does not contain more than 15 percent of the total amount of vinyl or vinylidene aromatic monomer in blocks of vinyl or vinylidene aromatic monomer of more than 3 units. More preferably, the interpolymer is not characterized by a high degree of either isotacticity or syndiotacticity. This means that in the carbon⁻¹³ NMR spectrum of the substantially random interpolymer the peak areas corresponding to the main chain methylene and methine carbons representing either meso diad sequences or racemic diad sequences should not exceed 75 percent of the total peak area of the main chain methylene and methine carbons. By the subsequently used term "substantially random interpolymer" is meant a substantially random interpolymer produced from the above-mentioned monomers.

Suitable α-olefin monomers which are useful for preparing the substantially random interpolymer include, for example, α-olefin monomers containing from 2 to about 20, preferably from 2 to about 12, more preferably from 2 to about 8 carbon atoms. Particularly suitable are ethylene, propylene, butene-1, 4-methyl-1-pentene, hexene-1 or octene-1 or ethylene in combination with one or more of propylene, butene-1, 4-methyl-1-pentene, hexene-1 or octene-1. Most preferred are ethylene or a combination of ethylene with C₃₋₈-α-olefins. These α-olefins do not contain an aromatic moiety.

Optional other polymerizable ethylenically unsaturated monomer(s) include strained-ring olefins such as norbornene and C₁₋₁₀ alkyl or C₆₋₁₀ aryl substituted norbornenes, with an exemplary interpolymer being ethylene/styrene/norbornene.

Suitable vinyl or vinylidene aromatic monomers which can be employed to prepare the substantially random interpolymer include, for example, those represented by the following Formula I 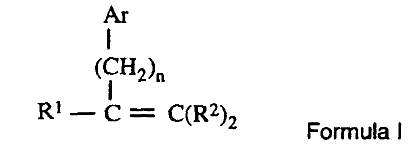 wherein R¹ is selected from the group of radicals consisting of hydrogen and alkyl radicals containing from 1 to about 4 carbon atoms, preferably hydrogen or methyl; each R² is independently selected from the group of radicals consisting of hydrogen and alkyl radicals containing from 1 to about 4 carbon atoms, preferably hydrogen or methyl; Ar is a phenyl group or a phenyl group substituted with from 1 to 5 substituents selected from halo, C₁₋₄-alkyl, and C₁₋₄-haloalkyl; and n has a value from zero to about 4, preferably from zero to 2, most preferably zero. Particularly suitable monomers include styrene and lower alkyl- or halogen-substituted derivatives thereof. Preferred monomers include styrene, α-methyl styrene, the lower alkyl-(C₁-C₄) or phenyl-ring substituted derivatives of styrene, such as for example, ortho-, meta-, and para-methylstyrene, t-butyl styrene, the ring halogenated styrenes, such as chlorostyrene, para-vinyl toluene or mixtures thereof. A more preferred aromatic monovinyl monomer is styrene.

By the term "sterically hindered aliphatic or cycloaliphatic vinyl or vinylidene monomers", it is generally meant the addition of polymerizable vinyl or vinylidene monomers corresponding to Formula II: 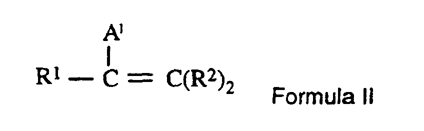 wherein A¹ is a sterically bulky, aliphatic or cycloaliphatic substituent of up to 20 carbons, R¹ is selected from the group of radicals consisting of hydrogen and alkyl radicals containing from 1 to about 4 carbon atoms, preferably hydrogen or methyl; each R² is independently hydrogen or an alkyl radical containing from 1 to about 4 carbon atoms, preferably hydrogen or methyl; or alternatively R¹ and A¹ together form a ring system. By the term "sterically bulky" is meant that the monomer bearing this substituent is normally incapable of addition polymerization by standard Ziegler-Natta polymerization catalysts at a rate comparable with ethylene polymerizations. α-Olefin monomers containing from 2 to about 20 carbon atoms and having a linear aliphatic structure such as propylene, butene-1, hexene-1 and octene-1 are not considered as sterically hindered aliphatic monomers. Preferred sterically hindered aliphatic or cycloaliphatic vinyl or vinylidene compounds are monomers in which one of the carbon atoms bearing ethylenic unsaturation is tertiary or quaternary substituted. Examples of such substituents include cyclic aliphatic groups such as cyclohexyl, cyclohexenyl, cyclooctenyl, or ring alkyl or aryl-substituted derivatives thereof, tert-butyl or norbornyl. Most preferred sterically hindered aliphatic or cycloaliphatic vinyl or vinylidene compounds are the various isomeric vinyl-ring substituted derivatives of cyclohexene and substituted cyclohexenes, and 5-ethylidene-2-norbomene. Especially suitable are 1-, 3-, and 4-vinylcyclohexene.

If the substantially random interpolymer contains a vinyl or vinylidene aromatic monomer and a sterically hindered aliphatic or cycloaliphatic monomer in polymerized form, the weight ratios between these two monomer types is generally not critical. Preferably, the substantially random interpolymer contains either a) one or more vinyl or vinylidene aromatic monomers or b) one or more sterically hindered aliphatic or cycloaliphatic monomers.

The most preferred substantially random interpolymers are interpolymers of ethylene and styrene and interpolymers of ethylene, styrene and at least one α-olefin containing from 3 to 8 carbon atoms.

The substantially random interpolymer usually contains from about 0.5 to about 65 mole percent of at least one vinyl or vinylidene aromatic monomer and/or sterically hindered aliphatic or cycloaliphatic vinyl or vinylidene monomer and from about 35 to about 99.5 mole percent of at least one aliphatic α-olefin having from 2 to about 20 carbon atoms. The percentage of the vinyl or vinylidene aromatic monomer can be determined by NMR. The substantially random interpolymers usually contain from 0 to about 20 mole percent of other polymerizable ethylenically unsaturated monomer(s).

It has been found that the multilayer structure of the present invention has the best drape properties if the substantially random interpolymer contains from about 5 to about 45, most preferably from about 15 to about 40 mole percent, of at least one vinyl or vinylidene aromatic monomer and/or sterically hindered aliphatic or cycloaliphatic vinyl or vinylidene monomer and from about 55 to about 95, most preferably from about 60 to about 85 mole percent of at least one aliphatic α-olefin having from 2 to about 20 carbon atoms. Very good drape properties are also achieved if the multilayer structure of the present invention contains more than one substantially random interpolymer which on the average contain the above-mentioned monomer ratios, even if some or all of the individual interpolymers do not contain the above-mentioned monomer ratios.

The melt index I₂ according to ASTM D 1238 Procedure A, condition E, generally is from 0.01 to 50 g/10 minutes, preferably from about to 20 g/10 minutes, more preferably from 0.1 to 10 g/10 minutes, and most preferably from about 0.5 to about 5 g/10 minutes. The glass transition temperature (Tg) of the substantially random interpolymers is preferably from -40°C to +35°C, more preferably from -30°C to +30°C, most preferably from about -20°C to about +25°C, measured according to differential mechanical scanning (DMS). The density of the substantially random interpolymer is generally about 0.930 g/cm³ or more, preferably from about 0.930 to about 1.045 g/cm³, more preferably from about 0.930 to about 1.040 g/cm³, most preferably from about 0.930 to about 1.030 g/cm³. The molecular weight distribution, M_{w}/Mₙ is generally from about 1.5 to about 20, preferably from about 1.8 to about 10, more preferably from about 2 to about 5.

While preparing the substantially random interpolymer, an amount of atactic vinyl or vinylidene aromatic homopolymer may be formed due to homopolymerization of the vinyl or vinylidene aromatic monomer at elevated temperatures. The presence of vinyl or vinylidene aromatic homopolymer is in general not detrimental for the purposes of the present invention and can be tolerated. The vinyl or vinylidene aromatic homopolymer may be separated from the substantially random interpolymer, if desired, by extraction techniques such as selective precipitation from solution with a non solvent for either the substantially random interpolymer or the vinyl or vinylidene aromatic homopolymer. For the purpose of the present invention it is preferred that no more than 30 weight percent, preferably less than 20 weight percent, based on the total weight of the substantially random interpolymer of atactic vinyl or vinylidene aromatic homopolymer is present.

The substantially random interpolymer may be modified by typical grafting, hydrogenation, functionalizing, or other reactions well known to those skilled in the art. The polymer may be readily sulfonated or chlorinated to provide functionalized derivatives according to established techniques. The substantially random interpolymer may also be modified by various chain extending or cross-linking processes including, but not limited to peroxide-, silane-, sulfur-, radiation-, or azide-based cure systems. A full description of the various cross-linking technologies is described in copending U.S. Patent Application Serial Nos. 08/921,641 (U.S. Patent No. 5,869,591) and 08/921,642 (corresponding to EP-A-778,852) both filed on August 27, 1997. Dual cure systems, which use a combination of heat, moisture cure, and radiation steps, may be effectively employed. Dual cure systems are disclosed and claimed in U. S. Patent Application Serial No. 536,022, filed on September 29, 1995 (corresponding to EP-A-852,596), in the names of K. L. Walton and S. V. Karande. For instance, it may be desirable to employ peroxide cross-linking agents in conjunction with silane cross-linking agents, peroxide cross-linking agents in conjunction with radiation, and sulfur-containing cross-linking agents in conjunction with silane cross-linking agents. The substantially random interpolymer may also be modified by various cross-linking processes including, but not limited to the incorporation of a diene component as a termonomer in its preparation and subsequent cross-linking by the aforementioned methods and further methods including vulcanization via the vinyl group using sulfur for example as the cross-linking agent.

One method of preparation of the substantially random interpolymer includes polymerizing a mixture of polymerizable monomers in the presence of one or more metallocene or constrained geometry catalysts in combination with various cocatalysts, as described in EP-A-0,416,815 by James C. Stevens et al. and U.S. Patent No. 5,703,187 by Francis J. Timmers. Preferred operating conditions for such polymerization reactions are pressures from atmospheric up to 3000 atmospheres and temperatures from -30°C to 200°C. Polymerizations and unreacted monomer removal at temperatures above the autopolymerization temperature of the respective monomers may result in formation of some amounts of homopolymer polymerization products resulting from free radical polymerization.

Examples of suitable catalysts and methods for preparing the substantially random interpolymer are disclosed in U.S. Application Serial No. 702,475, filed May 20, 1991 (EP-A-514,828); as well as U.S. Patent Nos. 5,055,438; 5,057,475; 5,096,867; 5,064,802; 5,132,380; 5,189,192; 5,321,106; 5,347,024; 5,350,723; 5,374,696; 5,399,635; 5,470,993; 5,703,187; and 5,721,185.

The substantially random α-olefin/vinyl(idene) aromatic interpolymer can also be prepared by the methods described in JP 07/278230 employing compounds shown by the general Formula III 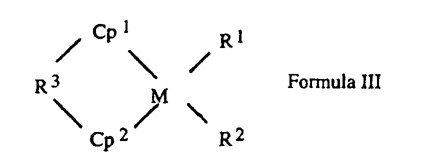 where Cp¹ and Cp² are cyclopentadienyl groups, indenyl groups, fluorenyl groups, or substituents of these, independently of each other; R¹ and R² are hydrogen atoms, halogen atoms, hydrocarbon groups with carbon numbers of 1 to 12, alkoxyl groups, or aryloxyl groups, independently of each other; M is a group IV metal, preferably Zr or Hf, most preferably Zr; and R³ is an alkylene group or silanediyl group used to cross-link Cp¹ and Cp².

The substantially random α-olefin/vinyl(idene) aromatic interpolymer can also be prepared by the methods described by John G. Bradfute et al. (W.R. Grace & Co.) in WO 95/32095; by R.B. Pannell (Exxon Chemical Patents, Inc.) in WO 94/00500; and in Plastics Technology, page 25 (September 1992).

Also suitable are the substantially random interpolymers which comprise at least one α-olefin/vinyl aromatic/vinyl aromatic/α-olefin tetrad disclosed in WO-98/09999-A by Francis J. Timmers et al. These interpolymers can be prepared by conducting the polymerization at temperatures of from about -30°C to about 250°C in the presence of catalysts as those disclosed in WO-98/09999-A. Particularly preferred catalysts include, for example, racemic-(dimethylsilanediyl)-bis-(2-methyl-4-phenylindenyl)zirconium dichloride, racemic-(dimethylsilanediyl)-bis-(2-methyl-4-phenylindenyl)zirconium 1,4-diphenyl-1,3-butadiene, racemic-(dimethylsilanediyl)-bis-(2-methyl-4-phenylindenyl)zirconium di- C₁₋₄ alkyl, racemic-(dimethylsilanediyl)-bis-(2-methyl-4-phenylindenyl)zirconium di- C₁₋₄ alkoxide, or any combination thereof. It is also possible to use the following titanium-based constrained geometry catalysts, [N-(1,1-dimethylethyl)-1,1-dimethyl-1-[(1,2,3,4,5-h)-1,5,6,7-tetrahydro-s-indacen-1-yl]silanaminato(2-)-N]titanium dimethyl; (1-indenyl)(tert-butyiamido)dimethylsilane titanium dimethyl; ((3-tert-butyl)(1,2,3,4,5-h)-1-indenyl)(tert-butylamido) dimethylsilane titanium dimethyl; and ((3-iso-propyl)(1,2,3,4,5-h)-1-indenyl)(tert-butyl amido)dimethylsilane titanium dimethyl, or any combination thereof.

Further preparative methods for the substantially random interpolymers used in the present invention have been described in the literature. Longo and Grassi (Makromol. Chem., Volume 191, pages 2387 to 2396 [1990]) and D'Anniello et al. (Journal of Applied Polymer Science, Volume 58, pages 1701 to 1706 [1995]) reported the use of a catalytic system based on methylalumoxane (MAO) and cyclopentadienyltitanium trichloride (CpTiCl₃) to prepare an ethylene-styrene copolymer. Xu and Lin (Polymer Preprints, Am.Chem.Soc.,Div.Polym.Chem., Volume 35, pages 686, 687 [1994]) have reported copolymerization using a MgCl₂/TiCl₄/NdCl₃/Al(iBu)₃ catalyst to give random copolymers of styrene and propylene. Lu et al. (Journal of Applied Polymer Science, Volume 53, pages 1453 to 1460 [1994]) have described the copolymerization of ethylene and styrene using a TiCl₄/NdCl₃/ MgCl₂ /Al(Et)₃ catalyst. Sernetz and Mulhaupt, (Macromol. Chem. Phys., volume 197, pages 1071 to 1083 [1997]) have described the influence of polymerization conditions on the copolymerization of styrene with ethylene using Me₂Si(Me₄Cp)(N-tert-butyl)TiCl₂/methylaluminoxane Ziegler-Natta catalysts. Copolymers of ethylene and styrene produced by bridged metallocene catalysts have been described by Arai, Toshiaki and Suzuki (Polymer Preprints, Am. Chem. Soc., Div. Polym. Chem. Volume 38, pages 349, 350 [1997]) and in U.S. Patent No. 5,652,315, issued to Mitsui Toatsu Chemicals, Inc. The manufacture of α-olefin/vinyl aromatic monomer interpolymers such as propylene/styrene and butene/styrene are described in U.S. Patent No. 5,244,996, issued to Mitsui Petrochemical Industries Ltd. or U.S. Patent No. 5,652,315 also issued to Mitsui Petrochemical Industries Ltd or as disclosed in DE 197 11 339 A1 to Denki Kagaku Kogyo KK.

The polymeric layer (B) of the multilayer structure of the present invention may optionally contain up to about 40 weight percent, preferably up to about 30 weight percent, more preferably up to about 20 weight percent, most preferably up to about 10 weight percent, of one or more further polymeric components, such as those described further below, based on the total weight of the polymeric layer (B). The polymeric components described below are not encompassed by the term "tackifier" as defined further above. However, the amount of the above-described substantially random interpolymer(s) generally is at least about 60 percent, preferably at least about 70 percent, more preferably at least about 80 percent and most preferably at least 90 about percent, based on the total weight of the polymeric layer (B).

Preferred additional, optional polymers are monovinyl or monovinylidene aromatic polymers or styrenic block copolymers or homopolymers or interpolymers of aliphatic α-olefins having from 2 to 20 carbon atoms or α-olefins having from 2 to 20 carbon atoms and containing polar groups.

Suitable monovinyl or monovinylidene aromatic polymers include homopolymers or interpolymers of one or more monovinyl or monovinylidene aromatic monomers, or interpolymers of one or more monovinyl or monovinylidene aromatic monomers and one or more monomers interpolymerizable therewith other than an aliphatic α-olefin. Suitable monovinyl or monovinylidene aromatic monomers are represented by the following Formula IV: 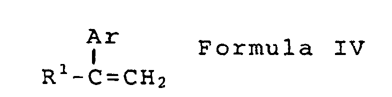 wherein R¹ and Ar have the meanings stated in Formula I further above. Exemplary monovinyl or monovinylidene aromatic monomers are those listed under Formula I further above, particularly styrene.

Examples of suitable interpolymerizable comonomers other than a monovinyl or monovinylidene aromatic monomer include, for example, C₄-C₆ conjugated dienes, especially butadiene or isoprene. In some cases it is also desirable to copolymerize a cross-linking monomer such as a divinyl benzene into the monovinyl or monovinylidene aromatic polymer.

The polymers of monovinyl or monovinylidene aromatic monomers with other interpolymerizable comonomers preferably contain, polymerized therein, at least 50 percent by weight and, preferably, at least 90 percent by weight of one or more monovinyl or monovinylidene aromatic monomers.

Styrenic block polymers are also useful as an additional, optional polymer in the polymeric layer (B). The term "block copolymer" is used herein to mean elastomers having at least one block segment of a hard polymer unit and at least one block segment of a rubber monomer unit. However, the term is not intended to include thermoelastic ethylene interpolymers which are, in general, random polymers. Preferred block copolymers contain hard segments of styrenic type polymers in combination with saturated or unsaturated rubber monomer segments. Suitable block copolymers having unsaturated rubber monomer units include, but are not limited to, styrene-butadiene (SB), styrene-isoprene(SI), styrene-butadiene-styrene (SBS), styrene-isoprene-styrene (SIS), α-methylstyrene-butadiene-α-methylstyrene or α-methylstyrene-isoprene-α-methylstyrene. The styrenic portion of the block copolymer is preferably a polymer or interpolymer of styrene and its analogs and homologs including α-methylstyrene and ring-substituted styrenes, particularly ring-methylated styrenes.

Other preferred additional, optional polymers are homopolymers or interpolymers of aliphatic α-olefins having from 2 to 20, preferably 2 to 18, more preferably 2 to 12, carbon atoms or α-olefins having from 2 to 20, preferably 2 to 18, more preferably 2 to 12, carbon atoms and containing polar groups.

Suitable aliphatic α-olefin monomers which introduce polar groups into the polymer include, for example, ethylenically unsaturated nitriles such as acrylonitrile, methacrylonitrile or ethacrylonitrile; ethylenically unsaturated anhydrides such as maleic anhydride; ethylenically unsaturated amides such as acrylamide or methacrylamide; ethylenically unsaturated carboxylic acids (both mono- and difunctional) such as acrylic acid or methacrylic acid; esters (especially lower, for example, C₁-C₆, alkyl esters) of ethylenically unsaturated carboxylic acids such as methyl methacrylate, ethyl acrylate, hydroxyethylacrylate, n-butyl acrylate or methacrylate, 2-ethyl-hexylacrylate, glycidyl acrylate or glycidyl methacrylate; ethylenically unsaturated dicarboxylic acid imides, such as N-alkyl or N-aryl maleimides, such as N-phenyl maleimide. Preferably such monomers containing polar groups are acrylic acid, vinyl acetate, maleic anhydride and acrylonitrile. Halogen groups that can be included in the polymers with aliphatic α-olefin monomers include fluorine, chlorine and bromine; preferably such polymers are chlorinated polyethylenes (CPEs) or polyvinyl chloride.

Preferred are copolymers of ethylene or propylene and at least one of acrylic acid, vinyl acetate, maleic anhydride or acrylonitrile; preferably ethylene-vinyl acetate copolymers, or ethylene-acrylic acid copolymers.

Suitable examples of homopolymers or interpolymers of aliphatic α-olefins having from 2 to 20 carbon atoms are homopolymers of ethylene or propylene, such as isotactic polypropylene, and interpolymers of ethylene and one or more α-olefins having from 3 to 8 carbon atoms, such as ethylene-propylene interpolymers, ethylene- 1-octene interpolymers, propylene-ethylene random interpolymers; interpolymers of propylene and at least one α-olefin containing from 4 to about 8 carbon atoms, terpolymers of ethylene, propylene and a diene, or rubber-toughened polypropylene. Preferred comonomers include 1-butene, 4-methyl-1-pentene, 1-hexene, and 1-octene. The olefinic polymer may also contain, in addition to the α-olefin, one or more non-aromatic monomers interpolymerizable therewith, such as C₄-C₂₀ dienes, preferably butadiene or 5 ethylidene-2-norbornene.

Useful propylene homo- or interpolymers are known in the art. Suitable examples of propylene homopolymers or interpolymers are isotactic polypropylene, propylene-ethylene random interpolymers or interpolymers of propylene and at least one α-olefin containing from 4 to about 8 carbon atoms. Preferred comonomers include 1-butene, 4-methyl-1-pentene, 1-hexene, and 1-octene. The propylene interpolymer may also contain, in addition to the α-olefin, one or more non-aromatic monomers interpolymerizable therewith, such as C₄-C₂₀ dienes, preferably butadiene or 5-ethylidene-2-norbornene. Propylene interpolymers contain more than about 50 mole percent of interpolymerized propylene. The propylene polymer generally has a melt-flow rate (MFR), measured according to ISO 1133 at 2.16 kg/230°C, in the range of from 1 to 100, preferably from 4 to 100, more preferably from 4 to 80 grams per 10 minutes.

It has been found that the combination of an above-described substantially random interpolymer and a propylene homopolymer, such as isotactic polypropylene, or, more preferably, a propylene-ethylene random interpolymer, in the polymeric layer (B) provides good embossing properties to the multilayer structure of the present invention, particularly a good embossing retention at elevated temperatures. A good embossing retention is particularly desirable in the production of artificial leather. A leathery surface structure is provided by embossing. A good embossing retention at elevated temperatures facilitates further processing, such as molding of the multilayer structure. For obtaining good embossing properties, the propylene polymer preferably has a melt flow rate (MFR), measured according to ISO 1133 (2.16 kg/230°C), in the range of from about 1 to about 50, preferably from about 4 to about 39, grams per 10 minutes. The positive influence of the presence of a polypropylene in the polymeric layer (B) is particularly visible at embossing temperatures of up to about 120°C.

The best embossing properties are achieved if the polymeric layer (B) comprises from about 60 to about 90 weight percent, preferably from about 70 to about 80 weight percent, of the substantially random interpolymer and from about 10 to about 40 weight percent, preferably from about 20 to about 30 weight percent of the propylene polymer.

One other class of useful olefinic polymers is generally produced by a high pressure polymerization process using a free radical initiator resulting in the traditional long-chain branched low density polyethylene (LDPE). LDPE employed in the present composition usually has a density of less than 0.94 g/cc (ASTM D 792) and a melt index of from 0.01 to 100, and preferably from 0.1 to 50 grams per 10 minutes (as determined by ASTM Test Method D 1238, (1979), Condition E (190°C; 2.16 kg). Compositions comprising about 65 to about 90 weight parts of a substantially random interpolymer and about 35 to about 10 weight parts LDPE are particularly useful.

Another class is the linear olefin polymers which have an absence of long-chain branching, as the traditional linear low density polyethylene polymers (heterogeneous LLDPE) or linear high density polyethylene polymers (HOPE) made using Ziegler polymerization processes (for example, U.S. Patent No. 4,076,698 (Anderson et al.), sometimes called heterogeneous polymers.

HDPE consists mainly of long linear polyethylene chains. The HDPE employed in the present composition usually has a density of at least 0.94 grams per cubic centimeter (g/cc) as determined by ASTM Test Method D 1505, and a melt index (ASTM-1238, (1979), Condition E (190°C; 2.16 kg) in the range of from 0.01 to 100, and preferably from 0.1 to 50 grams per 10 minutes.

A further class is that of the uniformly branched or homogeneous polymers (homogeneous LLDPE). The homogeneous polymers contain no long-chain branches and have only branches derived from the monomers (if having more than two carbon atoms). Homogeneous polymers include those made as described in U.S. Patent 3,645,992 (Elston), and those made using single-site catalysts in a reactor having relatively high olefin concentrations, as described in U.S. Patent Nos. 5,026,798 and 5,055,438 (Canich). The uniformly branched/homogeneous polymers are those polymers in which the comonomer is randomly distributed within a given interpolymer molecule and wherein the interpolymer molecules have a similar ethylene/comonomer ratio within that interpolymer.

The homogeneous or heterogeneous LLDPE employed in the present composition generally has a density of from 0.85 to 0.94 g/cc (ASTM D 792), and a melt index (ASTM-1238, (1979), Condition E (190°C; 2.16 kg) in the range of from 0.01 to 100, and preferably from 0.1 to 50 grams per 10 minutes. Preferably the LLDPE is an interpolymer of ethylene and one or more other α-olefins having from 3 to 18 carbon atoms, more preferably from 3 to 8 carbon atoms. Preferred comonomers include 1-butene, 4-methyl-1-pentene, 1-hexene, and 1-octene.

Further, there is the class of substantially linear olefin polymers (SLOP), preferably substantially linear ethylene polymers (SLEP), that may advantageously be used in the present invention. These polymers have processability similar to LDPE, but the strength and toughness of LLDPE. Similar to the traditional homogeneous polymers, the substantially linear ethylene/α-olefin interpolymers have only a single melting peak, as opposed to traditional Ziegler polymerized heterogeneous linear ethylene/α-olefin interpolymers which have two or more melting peaks (determined using differential scanning calorimetry). Substantially linear olefin polymers are disclosed in U.S. Patent Nos. 5,380,810; 5,272,236 and 5,278,272.

The density of the SLOP as measured in accordance with ASTM D-792 is generally from 0.85 g/cc to 0.97 g/cc, preferably from 0.85 g/cc to 0.955 g/cc, and especially from 0.85 g/cc to 0.92 g/cc.

The melt index, according to ASTM D-1238, Condition 190°C/2.16 kg (also known as I₂), of the SLOP is generally from 0.01 g/10 minutes to 1000 g/10 minutes, preferably from 0.01 g/10 minutes to 100 g/10 minutes, and especially from 0.01 g/10 minutes to 10 g/10 minutes. "I₁₀" is measured in accordance with ASTM D-1238, Condition 190°C/10 kg. The melt flow index ratio, that is, the I₁₀/I₂, is at least 5.63, preferably at least 6, more preferably at least 7, and is essentially independent of the polydispersity index, in contrast to conventional polyethylenes which show a dependence of the melt-flow index on the polydispersity index.

The substantially linear ethylene polymers (SLEP) have: i) from 0.01 to 3, preferably from 0.05 to 1, long chain branches per 1000 carbon atoms along the polymer backbone; ii) a melt-flow ratio, I₁₀/I₂ • (greater than or equal to) 5.63; iii) a molecular weight distribution, M_{w}/Mₙ, defined by the equation: (M_{w}/Mₙ)• (smaller than or equal to) (I₁₀/I₂)-4.63, and iv) a critical shear stress at the onset of gross melt-fracture of greater than 4x10⁶ dyne/cm² or a critical shear rate at the onset of surface melt-fracture of at least 50 percent greater than the critical shear rate at the onset of surface melt-fracture of a linear ethylene polymer comprising the same comonomer or comonomers and having an I₂, M_{w}/Mₙ and density within 10 percent of the substantially linear ethylene polymer.

Long-chain branching is defined herein as a chain length of at least about 6 carbon atoms, above which the length cannot be distinguished by carbon NMR spectroscopy. The long-chain branch can be about as long as the polymer backbone. For ethylene/·-olefin copolymers, the long-chain branch is at least one carbon longer than the short chain branch that results from the incorporation of the •-olefin(s) into the polymer backbone.

In contrast to the term "substantially linear", the term "linear" means that the polymer lacks measurable or demonstrable long-chain branches, that is, the polymer is substituted with an average of less than 0.01 long branches/1000 carbons. The polydispersity index M_{w}/Mₙ, as determined by gel permeation chromatography, is preferably less than 3.5, more preferably from 1.5 to 2.5.

Also, included are the ultra low molecular weight ethylene polymers and ethylene/α-olefin interpolymers described in the WO patent application no. 97/01181. These ethylenela-olefin interpolymers have I₂ melt indices greater than 1,000 or a number average molecular weight (Mn) less than 11,000.

The polymeric layer (B) may contain one or more fillers. If present, its amount generally is up to about 50 percent, preferably up to about 30 percent, more preferably up to about 10 percent, based on the total weight of the polymeric layer (B). Useful fillers include organic and inorganic fillers, such as cellulosic fillers like saw dust, wood flour or wood fibers, paper fibers, corn husks, straw, cotton, carbon black or graphite, talc, calcium carbonate, flyash, alumina trihydrate, glass fibers, marble dust, cement dust, clay, feldspar, silica or glass, fumed silica, alumina, magnesium oxide, zinc oxide, barium sulfate, aluminum silicate, calcium silicate, titanium dioxide, silicium dioxide, titanates, glass microspheres or chalk.

The polymeric layer (B) may contain one or more additives, for example antioxidants, such as hindered phenols or phosphites; colorants, pigments, light stabilizers, such as hindered amines; plasticizers, preferably oils, such as mineral oils, natural oils, for example epoxidized soybean oil, naphthenic oils, paraffinic oils or aromatic oils, or waxes, such as polyethylene waxes; processing aids, such as stearic acid or a metal salt thereof; ignition resistant additives, pigments; viscosity modifiers, antistatic additives, or cross-linking agents, such as peroxides or silanes.

If the additives are comprised in the polymeric layer (B), they are employed in functionally equivalent amounts known to those skilled in the art, generally in amounts of up to 30, preferably from 0.01 to 5, more preferably from 0.02 to 1 percent by weight, based upon the weight of the polymeric layer (B).

The polymeric layer (B) preferably has a thickness of from 2 micrometer to 5 millimeter, more preferably from 20 micrometer to 2 millimeter, most preferably from 50 micrometer to 1 millimeter.

The above-described substantially random interpolymer(s) can be combined with optional additives and processed to the polymeric layer (B) by any suitable means known in the art such as, but not limited to, Banbury mixing, extrusion compounding, roll milling, calendering, compression molding, injection molding and/or sheet extrusion. Useful temperatures for processing the substantially random interpolymer(s) in combination with optional additives to the polymeric layer (B) generally are from 80°C to 300°C, preferably from 100°C to 250°C, more preferably from 120°C to 200°C.

The polymeric layer (B) in the multilayer structure of the present invention may be foamed. A foamed polymeric layer (B) may be made by a conventional extrusion foaming process. The structure is generally prepared by heating a polymer material to form a plasticized or melt polymer material, incorporating therein a blowing agent to form a foamable gel, and extruding the gel through a die to form the foam product. Prior to mixing with the blowing agent, the polymer material is heated to a temperature at or above its glass transition temperature or melting point. The blowing agent may be incorporated or mixed into the melt polymer material by any means known in the art such as with an extruder or mixer. The blowing agent is mixed with the melt polymer material at an elevated pressure sufficient to prevent substantial expansion of the melt polymer material and to generally disperse the blowing agent homogeneously therein. Optionally, a nucleator may be blended in the polymer melt or dry blended with the polymer material prior to plasticizing or melting. The foamable gel is typically cooled to a lower temperature to optimize physical characteristics of the foam structure.

The gel can then be extruded or conveyed through a die of desired shape to a zone of reduced or lower pressure to form the foam structure. Alternatively, the gel can be coated onto the fabric by calendering at a temperature below that required for foaming the gel; and the coated fabric can be foamed at the foaming temperature or higher.

Blowing agents useful in making a foamed polymeric layer (B) include inorganic agents, organic blowing agents and chemical blowing agents known in the art, such as azodicarbonamide, oxy-bis(benezenesulfohydrazide) or toluene-sulfohydrazide. The amount of blowing agents incorporated into the polymer melt material to make a foam-forming polymer gel is generally from 0.2 to 5, preferably from 0.5 to 3, and most preferably from 1 to 2.5 gram moles per kilogram of polymer.

In addition, a nucleating agent may be added in order to control the size of foam cells. Preferred nucleating agents include inorganic substances such as calcium carbonate, talc, clay, titanium oxide, silica, barium sulfate, diatomaceous earth or mixtures of citric acid and sodium bicarbonate. The amount of nucleating agent employed typically ranges from 0.01 to 5 parts by weight per hundred parts by weight of a polymer resin.

In the multilayer structure of the present invention the polymeric layer (B) can be fixed to the fabric (A) by means of an adhesive layer, for example a water-based or solvent-based adhesive, such as urea formaldehyde systems, polyurethane-based adhesives, ethylene/vinyl acetate copolymers dispersed in water or polyurethanes dispersed in water; a hot-melt adhesive, a heat-seal adhesive or a pressure sensitive adhesive. Any textile laminating adhesives known in the art are useful. If the fabric (A) is smooth and tightly woven, it is preferred to position an adhesive layer between the polymeric layer (B) and the fabric (A) in order to obtain optimum adhesion between the polymeric layer (B) and the fabric (A).

If an adhesive layer is located between the fabric (A) and the polymeric layer (B) in the multilayer structure of the present invention, the adhesive layer is preferably applied by dip-coating, brushing, spraying, reverse-roll coating or using a doctor's knife to apply the fabric (A) and/or the polymeric layer (B) before or during fixing the polymeric layer (B) to the fabric (A). Alternatively, the polymeric layer (B) can be co-extruded with an adhesive layer.

Useful adhesives are for example graft copolymers wherein maleic acid or maleic anhydride is grafted on a polyolefin, such as an ethylene homo- or copolymer, a propylene homo- or copolymer or poly(propylene-butene), as described in U.S. Patent Nos. 5,302,418; 4,599,385, 4,198,327 or 4,588,648.

Other useful adhesives are ethylene polymers which have grafted thereto an unsaturated carboxylic acid or an anhydride, ester, amide, imide or metal salt and which are described in the published European application EP-0,873,242-A. The grafting compound preferably is a glycidyl methacrylcate, glycidyl acrylate, an aliphatic unsaturated monocarboxylic acid or dicarboxylic acid or an anhydride, an ester, amide, imide or metal salt derived from such acid, such as maleic acid, fumaric acid, methacrylic acid, acrylic acid, methyl acrylate, methyl methacrylate, ethyl acrylate, ethyl methacrylate, butyl acrylate, butyl methacrylate, acrylamide, methacrylamide, or, preferably maleic anhydride. Alkali metal salts are the preferred metal salts. The content of the grafted compound in the ethylene polymer is preferably in the range of from 0.05 to 15 weight percent, more preferably from 0.2 to 10 weight percent and most preferably from 0.3 to 2 weight percent, based on the total weight of the grafted ethylene polymer.

The grafted ethylene polymer as well as the ethylene polymer which is used for grafting generally have a density of up to 0.902 g/cm³, more preferably from 0.850 to 0.902 g/cm³, most preferably from 0.860 to 0.890 g/cm³, particularly from 0.865 to 0.880 g/cm³. It has been found that the polymer density is important for providing an adhesive with sufficient mechanical strength and flexibility. Preferably, the ethylene polymer is an interpolymer of ethylene and at least one C₃-C₂₀ •-olefin and/or a C₄-C₁₈-diolefin, more preferably a copolymer of ethylene and a C₄-C₁₀ •-olefin, most preferably a copolymer of ethylene and 1-butene, 1-hexene, 4-methyl-1-pentene, or 1-octene. The ethylene content is preferably more than 50 percent, more preferably from 60 to 90 percent, most preferably from 70 to 80 percent, based on the total weight of the polymer. One useful type of ethylene polymers is a linear copolymer of ethylene and an ·-olefin as described by Elston in U.S. Patent No. 3,645,992. Other useful ethylene polymers and processes for producing them are described in U.S. Patent Nos. 5,324,800 and 4,429,079. Preferred ethylene polymers are the substantially linear ethylene polymers (SLEP) described further above.

Methods of grafting an above-mentioned grafting compound onto an above-described non-grafted ethylene or propylene polymer are generally known in the art and described, for example, in U.S Patents No. 4,739,017 and 4,762,890.

The grafted ethylene polymer is dissolved in an organic solvent, for example hydrocarbons, such as benzene, toluene, or xylene; aliphatic hydrocarbons, such as hexane, heptane, octane, or decane; cyclic hydrocarbons, such as cyclohexane or methyl cyclohexane; medium hydrogen bonding solvents, such as methyl ethyl ketone or methyl isobutyl ketone, tetrahydrofurane or tertiary butanol, chlorinated hydrocarbons or mixtures thereof.

Preferably, the dissolved grafted ethylene polymer is blended with an additional adhesive, such as an epoxy resin, urethane, latex, acrylate, elastomer-solvent cement, gum, or polysilicone. A preferred additional adhesive is an isocyanate compound or prepolymer, preferably a di- or triisocyanate compound or prepolymer, such as tris(4-isocyanatophenyl) thiophosphate, toluene diisocyanate, methylene di-p-phenylene isocyanate, or urethane polymers thereof. Examples of commercially available polyisocyanate compounds or prepolymers include VKFE (manufactured by Fratelli Zucchini s.r.l.), DESMODUR RF-E (Trademark of Bayer), PAPI polymeric MDI (Trademark of The Dow Chemical Company) and UPACO 3570 (Manufactured by Worthen Industries, UPACO Division). The weight ratio between the grafted ethylene polymer and the isocyanate compound or isocyanate prepolymer preferably is from 10 to 1:1, more preferably from 5 to 1:1, based on the dry weight of the polymers.

The adhesive comprising a grafted ethylene polymer, solvent and, preferably, an isocyanate compound or prepolymer can be applied to the fabric in a known manner. Then the adhesive is preferably dried before the polymeric layer (B) is applied to the fabric (A) which has been coated with the adhesive.

If the fabric (A) is non-woven, roughened, slightly structured or loosely woven, it is generally not necessary to position an adhesive layer between the polymeric layer (B) and the fabric (A).

The fabric (A), the optional adhesive layer, and the polymeric layer (B) can be combined by various means, for example by means of heat lamination, sinter coating, calendering or extrusion coating. A preferred method of producing the multilayer structure of the present invention comprises the step of heat-laminating the polymeric layer (B) to layer (A). Generally a temperature from 130°C to 250°C, preferably from 150°C to 220°C, more preferably from 160°C to 190°C is applied. Heat-lamination can be carried out in a known device, such as a roll laminator, a hot-platen press, a hot-membrane press, a continuous band press or a compression molding press.

Another useful method of producing the multilayer structure of the present invention comprises the step of calendering the polymeric layer (B) to layer (A). Preferably a temperature from about 100°C to about 250°C, more preferably from about 140°C to about 230°C is applied.

Yet another useful method of producing the multilayer structure of the present invention comprises the step of extrusion coating the polymeric layer (B) to layer (A). Generally a temperature from about 150°C to about 300°C, preferably from about 160°C to about 280°C, more preferably from about 170°C to about 250°C is applied.

It is understood that the multilayer structure of the present invention also includes structures that contain more than one fabric (A) and/or more than one polymeric layer (B). Examples of useful layer sequences in the multilayer structures are (A)/adhesive/(A)/(B), (A)/(B)/(B), (A)/(B)/(A) and (B)/(A)/(B) wherein the two layers (A) and the two polymeric layers (B) need not be identical.

The multilayer structure of the present invention can comprise one or more additional layers (C), wherein the sequence of the layers preferably is (A)/(B)/(C), (C)/(A)/(B), (C)/(A)/(B)/(C), (C)/(B)/(A)/(B)/(C), (A)/(B)/(A)/(B)/(C), (A)/(B)/(C)/(C) or (B)/(A)/(B)/(C)/(C). If the multilayer structure contains two or more layers (C), the layers (C) can be the same as or different from each other. The nature of the additional layer(s) (C) mainly depends on the desired end-use of the multilayer structure. Exemplary of layers (C) are a lacquer layer, print layer, finishing layer or a UV protection layer.

The polymeric layer (B) can serve various purposes in the multilayer structure. Preferably, the polymeric layer (B) is applied on top of the fabric (A) to protect the fabric (A) and/or to render the multilayer structure waterproof. The polymeric layer (B) can be subjected to a finishing treatment, such as a corona treatment, to a flame treatment or to embossing.

It has surprisingly been found that multilayer structures of the present invention comprising a fabric (A) and a polymeric layer (B) have similar drape properties as corresponding multilayer structures which contain the same fabric (A) but a flexible PVC. Furthermore, the multilayer structures of the present invention have a smooth surface and a soft feel imitating natural leather, sometimes referred to as "haptics". The multilayer structure of the present invention can be used as or processed to artificial leather.

Accordingly, a large variety of water-impermeable goods can be produced from the multilayer structure of the present invention where good drape properties or desirable haptics are desired. They are useful in a humid environment. Preferred water-impermeable goods are water-impermeable clothes, such as rain coats; tablecloths; tents; water-impermeable covers, such as tarpaulins or awnings like truck covers; or wall coverings; curtains, such as shower curtains; banners, container bags, conveyer belts, textile constructions, inflatable goods, roofing materials, or upholstery, such as upholstery for homes, offices, cars or boats or for shoes, purses, handbags or for any articles which are typically produced from leather. When the multilayer structure of the present invention is used for the preparation of shoes, it can for example be used as an artificial leather for the outside of the shoes or as a reinforcing material at the toe section or at the heel section of the shoes.

The following examples are provided to illustrate the present invention. The examples are not intended to limit the scope of the present invention and they should not be so interpreted. Amounts are in weight parts or weight percentages unless otherwise indicated.

### TESTING

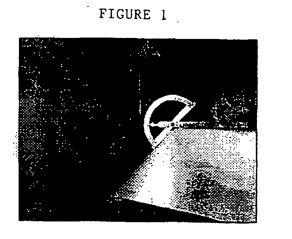

The properties of the polymers and blends are determined by the following test procedures.
Melt Index (MI) is determined by ASTM D-1238 (1979), Condition E (190°C; 2.16 kg), unless otherwise indicated.
Melt Flow Rate (MFR) is determined by ASTM D-1238 (230°C, 2.16 kg), unless otherwise indicated.
The drape properties of a rectangular tablecloth made of the multilayer structure of the invention or of a comparative multilayer structure is measured as follows: at one corner of the tablecloth a square with a side length of 200 mm is marked. The tablecloth is laid on a rectangular table. The point marked on the tablecloth that is at a distance of 200 mm to the two closest edges of the cloth, measured at right angles, is aligned to the corner of the table. After the cloth has been allowed to lay on the table for one minute, the angle formed between the horizontal table plate and the tablecloth extending beyond the table corner is measured. Fig. 1 is a photographic presentation on how the angle is measured. The larger the angle is, the better are the drape properties.

### PREPARATION OF ETHYLENE/STYRENE INTERPOLYMERS ESl-1 TO ESI-8

The interpolymer is prepared in a continuously operating loop reactor (36.8 gal, 140 L). An Ingersoll-Dresser twin-screw pump provides the mixing. The reactor runs liquid full at 475 psig (3,275 kPa) with a residence time of approximately 25 minutes. Raw materials and catalyst/cocatalyst flows are fed into the suction of the twin-screw pump through injectors and Kenics static mixers. The cataiyst/co-catalyst is a three-component system, that is a titanium catalyst, an aluminum catalyst component and a boron co-catalyst. The titanium catalyst is (1 H-cyclopenta[I]phenanthrene-2-yl)dimethyl(t-butylamido)-silanetitanium 1,4-diphenylbutadiene). It is prepared as described below. The aluminum catalyst component is a commercially available modified methalumoxane Type 3A (MMAO-3A). The boron cocatalyst is tris(pentafluorophenyl)borane. The molar ratio between the boron/titanium catalyst and the aluminum/titanium catalyst is listed in Table 1A below. The twin-screw pump discharges into a 2 inch (5 cm) diameter line which supplies two Chemineer-Kenics 10-68 Type BEM Multi-Tube heat exchangers in series. The tubes of these exchangers contain twisted tapes to increase heat transfer. Upon exiting the last exchanger, loop flow returns through the injectors and static mixers to the suction of the pump. Heat-transfer oil is circulated through the exchangers' jacket to control the loop temperature probe located just prior to the first exchanger. The exit stream of the loop reactor is taken off between the two exchangers. The flow and solution density of the exit stream is measured by a micromotion.

Solvent feed to the reactor is supplied by two different sources. A fresh stream of toluene from an 8480-S-E Pulsafeeder diaphragm pump with rates measured by a micromotion flowmeter is used to provide flush-flow for the reactor seals (20 pounds/hour (9.1 kg/hour). Recycle solvent is mixed with uninhibited styrene monomer on the suction side of five 8480-5-E Pulsafeeder diaphragm pumps in parallel. These five Pulsafeeder pumps supply solvent and styrene to the reactor at 650 psig (4,583 kPa). Fresh styrene flow is measured by a micromotion flowmeter, and total recycle solvent/styrene flow is measured by a separate micromotion flowmeter. Ethylene is supplied to the reactor at 687 psig (4,838 kPa). The ethylene stream is measured by a micromotion mass flowmeter. A Brooks flowmeter/controller is used to deliver hydrogen into the ethylene stream at the outlet of the ethylene control valve. The ethylene/hydrogen mixture combines with the solvent/styrene stream at ambient temperature. The temperature of the entire feed stream as it enters the reactor loop is lowered to 2°C by an exchanger with -10°C glycol on the jacket. Preparation of the three-catalyst components take place in three separate tanks: fresh solvent and concentrated catalyst/cocatalyst premix are added and mixed into their respective run tanks and fed into the reactor via variable speed 680-S-AEN7 Pulsafeeder diaphragm pumps. As previously explained, the three-component catalyst system enters the reactor loop through an injector and static mixer into the suction side of the twin-screw pump. The raw material feed stream is also fed into the reactor loop through an injector and static mixer downstream of the catalyst injection point but upstream of the twin-screw pump suction.

Polymerization is stopped with the addition of catalyst kill (water mixed with solvent) into the reactor product line after the micromotion flowmeter measuring the solution density. A static mixer in the line provides dispersion of the catalyst kill and additives in the reactor effluent stream. This stream next enters post reactor heaters that provide additional energy for the solvent removal flash. This flash occurs as the effluent exits the post reactor heater and the pressure is dropped from 475 psig (3,275 kPa) down to 450 mmHg (60 kPa) of absolute pressure at the reactor pressure control valve. This flashed polymer enters the first of two hot-oil jacketed devolatilizers. The volatiles flashing from the first devolatizer are condensed with a glycol-jacketed exchanger, passed through the suction of a vacuum pump, and are discharged to the solvent and styrene/ethylene separation vessel. Solvent and styrene are removed from the bottom of this vessel as recycled solvent while ethylene exhausts from the top. The ethylene stream is measured with a micromotion mass flowmeter. The measurement of vented ethylene plus a calculation of the dissolved gases in the solvent/styrene stream are used to calculate the ethylene conversion. The polymer and remaining solvent separated in the devolatilizer, is pumped with a gear pump to a second devolatizer. The pressure in the second devolatizer is operated at 5 mmHg (0.7 kPa) absolute pressure to flash the remaining solvent. This solvent is condensed in a glycol heat exchanger, pumped through another vacuum pump, and exported to a waste tank for disposal. The dry polymer (less than 1000 ppm total volatiles) is pumped with a gear pump to an underwater pelletizer with six-hole die, pelletized, spin-dried, and collected in 1000 pound (454 kg) boxes.

**Table IA**

| Polymer | Molar ratio boron/Ti catalyst | Molar ratio Al/Ti catalyst |
|---|---|---|
| ESI-1 | 6 : 1 | 16 : 1 |
| ESI-2 | 6 : 1 | 16 : 1 |
| ESI-3 | 4.4 : 1 | 16 : 1 |
| ESI-4 | 4 : 1 | 6 : 1 |
| ESI-5 | 6 : 1 | 15 : 1 |
| ESI-6 | 5.5 : 1 | 9.0 : 1 |
| ESI-7 | 6.5 : 1 | 7.0 :1 |
| ESI-8 | 5.5 : 1 | 9.0 : 1 |

### Preparation of the Titanium Catalyst: (1H-cyclopenta[I]phenanthrene-2-yl)dimethyl(t-butylamido)-silanetitanium 1,4-diphenylbutadiene)

### 1) Preparation of lithium 1H-cyclopenta[I]phenanthrene-2-yl

To a 250 mL round-bottom flask containing 1.42 g (0.00657 mole) of 1 H-cyclopenta[I]phenanthrene and 120 mL of benzene is added dropwise 4.2 mL of a 1.60 M solution of n-BuLi in mixed hexanes. The solution is allowed to stir overnight. The lithium salt is isolated by filtration, washing twice with 25 mL benzene and drying under vacuum. Isolated yield is 1.426 g (97.7 percent). 1 H NMR analysis indicates the predominant isomer is substituted at the 2 position.

### 2) Preparation of (1H-cyclopenta[I]phenanthrene-2-yl)dimethylchlorosilane

To a 500 mL round bottom flask containing 4.16 g (0.0322 mole) of dimethyldichlorosilane (Me₂SiCl₂) and 250 mL of tetrahydrofuran (THF) is added dropwise a solution of 1.45 g (0.0064 mole) of lithium 1 H-cyclopenta[I]phenanthrene-2-yl in THF. The solution is stirred for approximately 16 hours, after which the solvent is removed under reduced pressure, leaving an oily solid which was extracted with toluene, filtered through a diatomaceous earth filter aid (Cetite™), washed twice with toluene and dried under reduced pressure. Isolated yield is 1.98 g (99.5 percent).

### 3) Preparation of (1H-cyclopenta[I]phenanthrene-2-yl)dimethyl(t-butylamino)silane

To a 500 mL round-bottom flask containing 1.98 g (0.0064 mole) of (1 H-cyclopenta[I]phenanthrene-2-yl)dimethylchlorosilane and 250 mL of hexane is added 2.00 mL (0.0160 mole) of t-butylamine. The reaction mixture is allowed to stir for several days, then filtered using a diatomaceous earth filter aid (Celite™), washed twice with hexane. The product is isolated by removing residual solvent under reduced pressure. The isolated yield is 1.98 g (88.9 percent).

### 4) Preparation of dilithio (1H-cyclopenta[I]phenanthrene-2-yl)dimethyl(t-butylamido)silane

To a 250 mL round-bottom flask containing 1.03 g (0.0030 mole) of (1 H-cyclopenta[I]phenanthrene-2-yl)dimethyl(t-butylamino)silane) and 120 mL of benzene is added dropwise 3.90 mL of a solution of 1.6 M n-BuLi in mixed hexanes. The reaction mixture is stirred for approximately 16 hours. The product is isolated by filtration, washed twice with benzene and dried under reduced pressure. Isolated yield is 1.08 g (100 percent).

### 5) Preparation of (1H-cyclopenta[I]phenanthrene-2-yl)dimethyl(t-butylamido)silanetitanium dichloride

To a 250 mL round-bottom flask containing 1.17 g (0.0030 mole) of TiCl₃•3THF and about 120 mL of THF is added at a fast drip rate about 50 mL of a THF solution of 1.08 g of dilithio (1H-cyclopenta[I]phenanthrene-2-yl)dimethyl(t-butylamido)silane. The mixture is stirred at about 20°C for 1.5 hours at which time 0.55 grams (0.002 mole) of solid PbCl₂ is added. After stirring for an additional 1.5 h the THF is removed under vacuum and the residue is extracted with toluene, filtered and dried under reduced pressure to give an orange solid. Yield is 1.31 g (93.5 percent).

### 6) Preparation of (1H-cyclopenta[I]phenanthrene-2-yl)dimethyl(t-butylamido)silanetitanium 1.4-diphenylbutadiene

To a slurry of (1 H-cyclopenta[I]phenanthrene-2-yl)dimethyl(t-butylamido)silanetitanium dichloride (3.48 g, 0.0075 mole) and 1.551 grams (0.0075 mole) of 1,4-diphenylbutadiene in about 80 mL of toluene at 70°C is added 9.9 mL of a 1.6 M solution of n-BuLi (0.0150 mole). The solution immediately darkens. The temperature is increased to bring the mixture to reflux and the mixture is maintained at that temperature for 2 hours. The mixture is cooled to about -20°C and the volatiles are removed under reduced pressure. The residue is slurried in 60 mL of mixed hexanes at about 20°C for approximately 16 hours. The mixture is cooled to about -25°C for about 1 hour. The solids are collected on a glass frit by vacuum filtration and dried under reduced pressure. The dried solid is placed in a glass fiber thimble and solid extracted continuously with hexanes using a soxhlet extractor. After 6 hours a crystalline solid is observed in the boiling pot. The mixture is cooled to about -20°C, isolated by filtration from the cold mixture, and dried under reduced pressure to give 1.62 g of a dark crystalline solid. The filtrate is discarded. The solids in the extractor are stirred and the extraction continues with an additional quantity of mixed hexanes to give an additional 0.46 gm of the desired product as a dark crystalline solid.

The monomer amounts and polymerization conditions are provided in Table 1B. The polymer properties are provided in Table IC.

**Table IB**

| | Reactor Temp. | Solvent Flow | | Ethylene Flow | | Hydrogen Flow | Styrene Flow | | Ethylene reactor Conversion |
|---|---|---|---|---|---|---|---|---|---|
| | °C | Ib/hr | kg/hr | Ib/hr | Kg/hr | SCCM | Ib/hr | kg/hr | Percent |
| ESI-1 | 83 | 445 | 202 | 43 | 20 | 70 | 93 | 42 | 95 |
| ESI-2 | 100 | 470 | 214 | 64 | 29 | 673 | 59 | 27 | 94 |
| ESI-3 | 73 | 485 | 220 | 33 | 15 | 250 | 130 | 59 | 93 |
| ESI-4 | 100 | 432 | 196 | 64 | 29 | 650 | 36 | 16 | 97 |
| ESI-5 | 90 | 445 | 202 | 33 | 15 | 1378 | 115 | 52 | 93 |
| ESI-6 | 110 | 571 | 260 | 94 | 43 | 452 | 74 | 34 | 91 |
| ESI-7 | 112 | 475 | 216 | 91 | 41 | 3491 | 55 | 25 | 95 |
| ESI-8 | 115 | 608 | 276 | 105 | 48 | 849 | 54 | 24.5 | 91 |
| cc/min., standardized to 1 atm (760 torr) and OºC. | | | | | | | | | |

**Table IC**

| inter-Polymer | Melt Index | Styrene in ethylene / styrene Interpolymer (NMR) | |
|---|---|---|---|
| | g/10 min | Mol % | Wt. percent |
| ESI-1 | 0.6 | 29.5 | 60.9 |
| ESI-2 | 0.5 | 15.8 | 41.1 |
| ESI-3 | 1.0 | 38.9 | 70.3 |
| ESI-4 | 0.4 | 10.7 | 30.7 |
| ESI-5 | 5 | 37 | 69 |
| ESI-6 | 0.8 | 15.2 | 40 |
| ESI-7 | 9.9 | 10.8 | 31.1 |
| ESI-8 | 1.0 | 10.5 | 30.4 |

### POLYMERS AND ADDITIVES

Polymers other than ESI and additives used in the Examples 1 through 33 and Comparative Examples A to F are listed in Table ID below.

**Table ID**

| **Polymer or Additive** | **Description** | **Code** |
|---|---|---|
| AFFINITY™ PL1880 | Polyolefin plastomer, melt index MI(190°C, 2.16 kg) 1 g/10 min., density 903 kg/m³, available from The Dow Chemical Company | POP |
| AFFINITY™ HF 1030 | Polyolefin plastomer, melt index Ml (190°C, 2.16 kg) of 2.5 g/10 min., density of 935 kg/m³, available from The Dow Chemical Company | |
| STYRON™ 648 | High molecular weight polystyrene, Ml (200°C, 5kg) 1.2 g/10 min., available from The Dow Chemical Company | |
| TYRIL 602 | Copolymer of styrene and acrylonitrile with Ml (230°C, 3.8 kg) of 2.0 g/10 min., available from The Dow Chemical Company | |
| PRIMACOR™ 1420 | Ethylene/Acrylic acid copolymer, 9.7 percent acrylic acid content, MI(190°C, 2.16 kg) 3 g/10 min., available from The Dow Chemical Company | |
| Linear Polyethylene | Linear homogeneous PE, density 906 kg/m³, Ml (190°C, 2.16kg) 1.8 g/10 min, melting temperature Tm 91°C (measured by DSC, differential scanning calorimetry), | LPE |
| Yellow flexible-PVC mixture | Suspension PVC (S-PVC) with a viscosity index of about 105 mUg, containing 25-30 percent plasticizer (phthalate type) and a yellow pigment | Y-fPVC |
| f-PVC formulation for artificial leather | Mixture of: 1000 parts of S-PVC with a viscosity index of about 105 mUg, 550 parts of dioctyl phthalate (DOP), 250 parts of calcium carbonate of fine particle size, 10 parts of titanium dioxide, 3 parts of barium stearate, 3 parts of zinc oxide, 1.5 parts of stearic acid, 35 parts of Porofor ADC /L-C2 (Trademark) foaming agent and 12 parts of Irgastab K136 cell size regulator (Trademark) | AL-fPVC |
| White Master batch 1 | Masterbatch with a polyethylene carrier containing about 45 percent of colorant and 6870 ppm Irganox 1010 and 8710 ppm Irgafos 168 stabilizers (Trademarks). The colorant is mainly titanium dioxide. The masterbatch has an Ml (190°C, 2.16kg) of 7.8 g/10 min. and a density of 1.295 g/cm³ | MB W1 |
| White Master batch 2 | Titanium dioxide in a polyethylene carrier, obtainable from Schullman as type 8250 | MB W2 |
| Zinc Stearate | Zinc Stearate | ZnSt |
| Titanium dioxide | Available as Kronos 2220 (trademark) | |
| Irganox B900 FF (Trademark) | Antioxidant mixture of Irganox 1076 and Irgafos 168 (Trademarks) at a ratio of 1:4 | B900 |
| Stabilizer masterbatch in ESI-5 | Melt blend of 90% percent ESI-5 and 10% percent Irganox 1010 (Trademark), melt blended at about 150°C in a mixing extruder | MB AO ESI |
| Master batch UV | Masterbatch UV10217PP (trade designation) obtained from Constab, containing about 13 percent of light stabilizer Chimasorb 944 (Trademark) in a polypropylene carrier | PPMB UV |
| Silicone modifier master batch | Polyethylene based master batch containing 50 percent high molecular weight polydimethyl siloxane (PDMS), obtained from Dow Corning | PDMS MB |
| Porofor ADC LC2 (Trademark) | Azodicarbonamide foaming agent, commercially available from Bayer | |
| Irgastab K 136 | Trademark for a cell size regulator | |
| Silkat R and Silkat VS 758/0 (trademark) | Silane-based cross-linking agents, available from Osi Specialties S.A., a subsidiary of Witco | |
| Aluminum trihydrate | Available from Martinswerke under the trademark Martinal 107C | ATH |
| Tinuvin 328 and Chimasorb 944 | Trademarks for UV additives, commercially available from Ciba-Geigy | |
| Polyplast PC 7301 LD | Trademark for a carbon black master batch in low density polyethylene (LDPE) | |
| Perkadox 14S | Trademark for a peroxide available from Akzo Nobel | |
| Perkalink 300 | Trademark for a co-agent available from Akzo Nobel | |
| Irganox B225 | Trademark for an antioxidant | |
| ADK STAB AO-60, ADK STAB 2112, ADK STAB LA 502 | ADK STAB is a trademark from Asahi Denka for stabilizers | |
| Trigonox 101 | Trademark for a commercially available peroxide | |

### Examples 1 to 14 and Comparative Examples A to E

Fabrics are coated with the polymer formulations listed in Tables IIA and IIB below.

The polymer formulations of Examples 1 to 14 and Comparative Examples B, C and D are all made by weighing the appropriate amounts of polymers and additives prior to tumble blending for about 10 minutes. The thus obtained pre-blend is then used as the feed for an extruder. The flexible PVC used in Comparative Examples A and E is available as a pre-blend ready for feeding the extruder.

**Table IIA**

| **Example** | 1 | 2,3 | 4 | 5 | 6 | 7 | 8 | 9 | 10 | 11 | 12, 13,14 |
|---|---|---|---|---|---|---|---|---|---|---|---|
| Amounts weighed per batch in kg, tumble blended | | | | | | | | | | | |
| ESI-1 | 20 | | | | | | 19 | | | 16 | 16 |
| ESI-2 | | 20 | | | | | | | 20 | | |
| ESI-3 | | | 20 | | | 7 | | | | | |
| ESI-4 | | | | 20 | | 12 | | 20 | | | |
| ESI-5 | | | | | 20 | | | | | | |
| STYRON 648 | | | | | | | | | | 4 | |
| LPE | | | | | | | | | | | 4 |
| TYRIL 602 | | | | | | | 0.5 | | | | |
| Primacor 1420 | | | | | | 1 | 1 | | | | |
| MB W1 | | | | | | | | | | 1 | 1 |
| MB W2 | 0.4 | 0.4 | 0.4 | 0.4 | 0.4 | 0.4 | 0.4 | 0.4 | 0.4 | | |
| MB AO ESI | 0.2 | 0.2 | 0.2 | 0.2 | 0.2 | 0.2 | 0.2 | 0.2 | 0.2 | | |
| B900 | 0.05 | 0.05 | 0.05 | 0.05 | 0.05 | 0.025 | 0.05 | 0.025 | 0.025 | | |
| ZnSt | 0.1 | 0.1 | 0.1 | 0.1 | 0.1 | 0.1 | 0.1 | 0.1 | 0.1 | | |
| PDMS MB | | | | | | | 0.5 | | | | |
| PPMB UV | | | | 0.3 | | 0.3 | | 0.3 | 0.3 | | |

**Table IIB**

| **Comparative Example** | A, E | B | C | D |
|---|---|---|---|---|
| Y-fPVC | 100 | | | |
| POP | | 20 | 20 | 10 |
| MB W2 | | 0.4 | 0.4 | 0.2 |
| MB AO ESI | | 0.1 | 0.2 | |
| B900 | | | 0.025 | |
| ZnSt | | 0.08 | 0.08 | 0.05 |
| PPMB UV | | 0.3 | | 0.15 |

The melt of the polymer formulations listed above from the extruder die drops onto a conveyor belt which transports the melt in about 10 seconds to drop into the nip of two calender rolls of a Ramisch-Kleinewefers pilot calendar coating machine, with a maximum extruder out-put of 80 kg/hour.

The pilot calender-coating machine has the following characteristics:
Thickness range: 80 to 2000 g/m²,
Operating width: 280 to 680 mm,
Calender rolls: 2, diameter 400 mm, 30 degree angle,
Calender gap load: up to 350 N/mm,
Speed range 1.5 to 30 m/minute,
Temperature range: up to 250°C,
Compounding: 60 mm Single-screw, 30D mixing screw, 70 to 270 rpm, 76 kW power.

The calendering conditions are set as follows:
Operating width set at 660 mm,
Coating thickness target of about 300 micron,
Line speed target of 7 m/minute
Melt Temperature of about 175°C,
Friction ratio between first and second calender roll set at 30 percent,
Calender roll set temperature: 160°C to 175°C and 160°C to 180°C,
Extruder rpm (revolutions per minute) set at 100 with inclining temperature profile to get the desired melt temperature.

The specific operating conditions for coating fabrics with the polymer formulations of Examples 1 through 14 and of Comparative Examples A to E are listed in Tables IIC and IID below.

The fabrics used in the Examples and Comparative Examples are listed in Table IIE below. The polyester fabric FAB5 used in Examples 1, 2 and 4 through 8 and in Comparative Examples A and B have been subjected to a corona treatment before the fabric is preheated and pressed on the polymeric layer.

**Table IIC**

| **Example** | 1 | 2,3 | 4 | 5 | 6 | 7 | 8 | 9 | 10 | 11 | 12,1 3, 14 |
|---|---|---|---|---|---|---|---|---|---|---|---|
| Temp. Setting | | | | | | | | | | | |
| Zone 1 (°C) | 150 | 140 | 140 | 160 | 130 | 150 | 150 | 160 | 160 | 155 | 155 |
| Zone 2 (°C) | 155 | 145 | 145 | 165 | 135 | 155 | 155 | 165 | 165 | 165 | 165 |
| Zone 3 (°C) | 155 | 150 | 150 | 165 | 140 | 155 | 155 | 165 | 165 | 165 | 165 |
| Zone 4 (°C) | 165 | 155 | 155 | 170 | 145 | 160 | 165 | 170 | 170 | 175 | 175 |
| Die (°C) | 165 | 160 | 160 | 170 | 150 | 165 | 165 | 170 | 170 | 170 | 170 |
| Mass Temp. (°C) | 182 | 182 | 176 | 160 | 167 | Nm | 182 | 184 | 170 | 70 | 100 |
| Speed (rpm) | 50 | 60 | 59 | 40 | 48 | 60 | 60 | 60 | 55 | 100 | 100 |
| Torsion moment (percent) | 95 | 80 | 76 | 85 | 38 | 90 | 80 | 80 | 82 | 70 | 85 |

| Roll Temperature | | | | | | | | | | | |
|---|---|---|---|---|---|---|---|---|---|---|---|
| Upper roll (°C) | 168 | 160 | 159 | 164 | 150 | 159 | 168 | 174 | 174 | 168 | 175 |
| Lower roll (°C) | 173 | 165 | 164 | 163 | 154 | 169 | 173 | 179 | 179 | 173 | 180 |
| Bearing Force (kN) | 45 | 40 | 41 | 47 | 34 | 37 | 45 | 47/ 48 | 46/ 44 | 47 | 49 |
| Line speed (m/min) | 6 | 6 | 6 | 6 | 6 | 6 | 6 | 6 | 6 | 7 | 8 |
| Preheating Temp. Fabric (°C) | 120 | 120 | 120 | 120 | 120 | 120 | 120 | 120 | 120 | - | - |
| Nm = not measured | | | | | | | | | | | |

**Table IID**

| **Comparative Examples** | | **A,E** | **B** | **C** | **D** |
|---|---|---|---|---|---|
| Temp. Setting | | | | | |
| Zone 1 (°C) | | 157 | 160 | 160 | 160 |
| Zone 2 (°C) | | 167 | 165 | 165 | 165 |
| Zone 3 (°C) | | 177 | 165 | 165 | 165 |
| Zone 4 (°C) | | 177 | 170 | 170 | 170 |
| Die (°C) | | 182 | 170 | 170 | 170 |
| Mass Temp. (°C) | | nm | 160 | 172 | *nm |
| Speed (rpm) | | 35 | 45 | 60 | 50 |
| Torsion moment (percent) | | 77 | 109 | 90 | 100 |

| Roll Temperature | | | | | |
|---|---|---|---|---|---|
| Upper roll (°C) | | 172 | 164 | 174 | 174 |
| Lower roll (°C) | | 177 | 168 | 179 | 179 |
| Bearing Force (kN) | | 23.4 | 46 | 44.8/45.2 | 45.6 |
| Friction (percent) | | -30 | -30 | -30 | -30 |
| Line speed | (m/min.) | 6 | 6 | 6 | 6 |
| Preheating Temp Fabric (°C) | | 120 | 120 | 120 | 120 |
| *nm not measured | | | | | |

**Table IIE**

| **Designation** | **Type** | **Weight (g/m**^{**2**}**)** | **Details** |
|---|---|---|---|
| FAB1 | Viscose | 89.8 | Threads per cm: warp 18.6 / fill 14.6 |
| FAB2 | Polyester Fleece | 58 | Polyester non-woven |
| FAB3 | Polyester Fleece | 150 | Polyester non-woven |
| FAB4 | Cotton | 117.6 | Threads per cm: warp 21 / fill 19 |
| FAB5 | Polyester technical | 196 | Threads per cm: Warp 9 / Fill 9, PET >1100 dtex |
| FAB6 | Polypropylene | 289 | Threads per cm: Warp 20.5 / Fill 9.5, IBENA 8902 |

### Example 15 and Comparative Example F

For Comparative Example F the commercially available PVC formulation AL-fPVC is used.

For Example 15 a formulation is prepared consisting of 1000 parts of ESI-2, 80 parts of calcium carbonate, 20 parts of titanium dioxide, 10 parts of Silcat R, 10 parts of ATH, 10 parts of MB AO ESI, 20 parts of Porofor ADC LC2, 3 parts of zinc stearate, 3 parts of zinc oxide, 10 parts of stearic acid and 10 parts of lrgastab K136.

In Example 15 and comparative Example F the formulation is directly molten on two hot calender rolls during 15 minutes. Then the melt is applied as a coating to the fabric FAB 3 with the following Calendering conditions:
Operating width set at 400 mm,
Coating thickness target of about 300 micron,
Line speed target of 5 m/minute,
Melt Temperature of about 160°C,
Friction ratio between first and second calender roll set at 10 percent (Example 15) or 30 percent (Comparative Example F),
Calender roll set temperature: 155°C to 160°C and 160°C to 165°C,
Bearing force about 32 kN (Example 15) or about 15 kN (Comparative Example F).

Example 15 and comparative Example F are foamed in a Mattis type hot air oven at 200°C during 2 minutes. The polymeric layer foams on top of the fabric. The polymeric coating layer expands with a factor of about 2.5.

### Drape Properties of Examples 1 to 15 and Comparative Examples A to F

The drape properties of the coated fabrics are measured as described further above. The drape angles of the coated fabrics of Example 15 and of comparative Example F are measured on the coated, non-foamed fabric. The fabric (A), the main polymer in the polymeric layer (B), the total weight of the coated fabric per square meter, the calculated coating weight and the measured angle in the drape test are listed in Table III below.

**Table III**

| **(comparative) Example** | **Main polymer in layer (B)** | **Fabric** | **Total Weight** | **Calculated Coating weight** | **Drape Angle** |
|---|---|---|---|---|---|
| | | | g/m² | g/m² | |
| 1 | ESI-1 | FAB5 | 485.6 | 289.6 | 55 |
| 2 | ESI-2 | FAB5 | 501.4 | 305.4 | 51 |
| 3 | ESI-2 | FAB5 | 500 | 304 | 50 |
| 4 | ESI-3 | FAB5 | 503.3 | 307.3 | 50 |
| 5 | ESI-4 | FAB5 | 508.3 | 312.3 | 37.5 |
| 6 | ESI-5 | FAB5 | 450 | 254 | 55 |
| 7 | ESI-4/ESI-3 | FAB5 | 537.5 | 341.5 | 43.5 |
| 8 | ESI-1 | FAB5 | 461.1 | 265.1 | 49 |
| A | Y-fPVC | FAB5 | 374 | 178 | 41.5 |
| B | POP | FAB5 | 472.2 | 276.2 | 25 |
| | | | | | |
| C | POP | FAB6 | 544.4 | 255.4 | 33.5 |
| 9 | ESI-4 | FAB6 | 586.1 | 297.1 | 48 |
| 10 | ESI-2 | FAB6 | 580 | 291 | 46.5 |
| | | | | | |
| D | POP | FAB1 | 378.3 | 288.5 | 26 |
| E | Y-fPVC | FAB1 | 300 | 210.2 | 41.5 |
| 11 | ESI-1 | FAB1 | 388.7 | 298.9 | 36.5 |
| 12 | ESI-1 | FAB1 | 394 | 304.2 | 35.5 |
| 13 | ESI-1 | FAB4 | 427.8 | 310.2 | 50 |
| 14 | ESI-1 | FAB2 | 390 | 331.4 | 51 |
| | | | | | |
| F | AL-fPVC | FAB3 | 530 | 380 | 38 |
| 15 | ESI-2 | FAB3 | 600 | 450 | 50 |

The comparisons between Examples 1 through 8 and Comparative Example B, the comparison between Example 9 and 10 and Comparative Example C and the comparison between Examples 11 through 14 and Comparative Example D illustrate the improved drape properties of the multi-layer structures of the invention, as compared to structures which contain a polymeric layer (B) made of a polyolefin plastomer.

The coated fabrics of Examples 1 through 8, 11, 12 and 15 have similar or even better drape properties than the fabrics of Comparative Examples A, E and F coated with f-PVC, which is the standard in the industry. Similar or better drape properties are even achieved in Examples 1 through 8, 11 and 12 with a substantially higher coating weight than that of f-PVC.

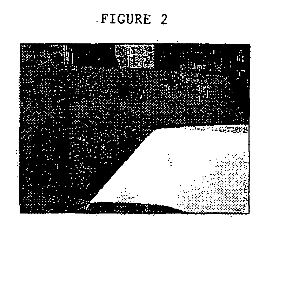

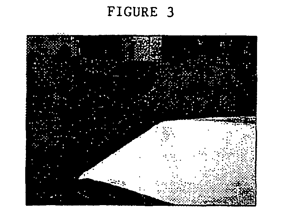

Fig. 2 is a photographic representation of the drape properties of the tablecloth of Example 9. Fig. 3 is a photographic representation of the drape properties of the tablecloth of Comparative Example C. The comparison between Fig. 2 and Fig. 3 illustrates the improved drape properties of tablecloths made from a multilayer structure of the invention.

### Examples 16 to 24 - Artificial Leather

The coated fabrics of Examples 16 through 24 find use in artificial leather.

### Example 16

Example 15 is repeated except that the polymer formulation does not contain Silcat R and ATH, but includes 11.4 parts of Perkadox 14S and 5 parts of Perkalink 300. The polymer formulation is applied onto FAB3 as described in Example 15. A standard mat lacquer is applied. Subsequently the polymer coating is foamed in an oven at 200°C during 2 minutes. The foamed structure is then embossed in a hot platen press at about 100°C.

### Example 17

80 parts of ESI-6 are blended with 20 parts of Affinity HF 1030 polyolefin plastomer. This blend is mixed with 8 parts of ultra fine calcium carbonate, 2 parts of titanium dioxide, 2 parts of Perkadox 14S, 2 parts of Porofor ADC LC2, 0.1 parts of Irganox B225, 0.5 parts of zinc stearate, 0.5 parts of zinc oxide, and 1 part of stearic acid. This formulation is coated onto FAB3, a mat lacquer is applied to the resulting coating and the coating is foamed as described in Example 15.

### Example 18

70 parts of ESI-2 are blended with 30 parts of ESI-7. This blend is mixed with 8 parts of ultra fine calcium carbonate and 2 parts of titanium dioxide, 1 part of Trigonox 101, 3 parts of Porofor ADC LC2, 0.1 parts of Irganox B225, 1 part of zinc stearate, and 1 part of zinc oxide. This formulation is coated onto FAB3 and further processed as in Example 16.

### Example 19

50 parts of ESI-8 are blended with 50 parts of ESI-4. This blend is mixed with 8 parts of ultra fine calcium carbonate, 2 parts of titanium dioxide, 1.14 parts of Perkadox 14S, 2 parts of Porofor ADC LC2, 0.1 parts of Irganox B225, 0.5 parts of zinc stearate, 0.5 parts of zinc oxide and 1 part of stearic acid. This formulation is coated onto FAB3 and further processed as in Example 16.

### Example 20

70 parts of ESI-2 are blended with 30 parts of Affinity HF 1030 polyolefin plastomer. This blend is mixed with 10 parts of ultra fine silica (commercially available as Ultrasil VN3 from Degussa), 2 parts of Silcat VS 758/0, 4 parts of ATH, 5 parts of Polyplast PC 7301 LD, 2.5 parts of azodicarbonamide (foaming agent), 0.2 parts of Irganox B225, 0.5 parts of zinc stearate and 1 part of stearic acid. The dry blend is extruded to result in a melt temperature of about 155°C. The melt is transferred to the nip of the calender rolls and coated as a first layer onto FAB3 as described in Examples 1 through 14.

A second layer is applied onto the first layer. The second layer consists of a blend of 70 parts of ESI-2 and 30 parts of a high density polyethylene with an MI of 4 g/10 minutes and a density of 955 kg/m³. This blend is mixed with 10 parts of ultra fine Silica (Ultrasil VN3 from Degussa), 2 parts of Silcat VS 758/0, 4 parts of ATH, 3 parts of PDMS MB, 0.2 parts of Irganox B225, 0.2 parts of Tinuvin 328 and 0.2 parts of Chimasorb 944.

The composite fabric containing the two polymer layers is then lacquered, embossed and subsequently foamed as described in Examples 16 to 19.

### Examples 21 and 22

### A) Foamable layer:

In Example 21 60 parts of ESI-2 are blended with 40 parts of an ELITE (trademark) medium density polyethylene with an MI of 0.8 g/10 minutes and a density of 940 kg/m³.

In Example 22 70 parts of ESI-2 are blended with 30 parts of the ELITE™ (medium density polyethylene.

An above-mentioned blend is mixed with 10 parts of calcium carbonate, 3 parts of Polyplast PC 7301 LD, 0.7 parts of Lupersol™ 130XL peroxide (commercially available from Elf Atochem), 0.2 parts of Irganox B225, 0.5 parts of zinc oxide, and 1 part of zinc stearate. The formulation is added into an internal mixer, where the formulation is homogeneously compounded at a temperature setting of above 130°C in about 5 to 6 minutes. Then the melt is discharged from the internal mixer onto a roll mill, 3.6 parts of azodicarbonamide are then added into the blend and dispersed for the production of a molten polymer sheet. A continuous melt-strip is cut off and is used to feed the calendering line. The produced calendered film has a weight of about 200 g/m².

The calendered film of each Example is laminated onto three different fabrics:
a) a woven polyester fabric (21 * 19 threads per cm of PET 280 dtex, hereinafter called FAB8),
b) a woven fabric made from a blend of 80 percent of a polyester and 20 percent of RAYON,
c) a woven fabric made from a blend of 65 percent of a polyester and 35 percent of RAYON.

The fabrics have been pre-treated with a polyurethane-based adhesive prior to the lamination of the calendered film onto the fabric.

### B) Non-foamable layer

The same polymer blend is used in Examples 21 and 22 as for the foamable layer A). This blend is mixed with 10 parts of calcium carbonate, 3 parts of Polyplast PC 7301 LD, 0.7 parts of Lupersol 130XL peroxide (Trademark, commercially available from Elf Atochem), 0.2 parts of lrganox B225, 0.1 parts of Chimasorb 944 and 0.75 parts of zinc stearate.

A calendered film of a weight of about 200 g/m² is produced from the polymer formulation in the same manner as described above for the foamable layer A), but without addition of azodicarbonamide. The calendered film is laminated on top of the layer A) on the fabric.

The composite fabric containing the two polymer layers is put in an oven at 210°C for about 2 minutes whereby layer A) is foamed. The composite fabric is then lacquered and embossed as described in Examples 16 to 19.

### Examples 23 and 24

Examples 21 and 22 are repeated, except that the non-foamable layers B) of Examples 21 and 22 are laminated on the three types of fabrics described in Examples 21 and 22 and that the resulting coated fabrics do not contain a foamable layer A).

### Examples 25 to 28: Tarpaulins

### Example 25

50 parts of ESI-8 are blended with 50 parts of ESI-7. This blend is mixed with 15 parts of calcium carbonate, 0.1 parts of ADK Stab AO-60, 0.1 parts of ADK Stab 2112, 0.3 parts of ADK Stab LA-502 and 1 part of zinc stearate.

The formulation is added into a Banbury-type internal mixer, where the formulation is homogeneously compounded at a temperature setting of about 150°C for about 5 to 6 minutes. Then the melt is discharged from the internal mixer onto a roll mill for the production of a molten polymer sheet. A continuous melt-strip is cut off from the roll and is used to feed the calendering line. The resulting calendered film is coated onto a woven polyester fabric with 1000 denier 20 by 20 per inch (1100 decitex 8 by 8 per centimeter). This procedure is repeated to produce a polymer coating on both sides of the fabric, that means to achieve a B/A/B structure. Each polymer layer on both sides of the polyester fabric has a weight of about 200 g/m².

### Example 26

70 parts of a blend of 80 percent ESI-8 and 20 percent ESI-7 are blended with 30 parts of an ethylene/vinyl acetate copolymer with an MI of 2 g/10 minutes and a vinyl acetate content of 25 percent (ELVAX™ 3190 from DUPONT). This blend is mixed with 30 parts of ATH, 0.1 parts of ADK Stab AO-60, 0.1 parts of ADK Stab 2112, 0.3 parts of ADK Stab LA-502 and 1 part of zinc stearate.

The formulation is processed as described in Examples 21 and 22 and the resulting calendered film is coated on both sides of a woven polyester fabric FAB5 resulting in a B/A/B structure. Each polymer layer on both sides of the polyester fabric has a weight of about 350 g/m².

Prior to calender coating, the fabric has been treated with a heat-reactive adhesive system based on an acrylic modified polyurethane.

### Example 27

80 parts of ESI-8 are blended with 20 parts of a low density polyethylene (LDPE) with an MI of 0.7 g/10 minutes and a density of 923 kg/m³. This blend is mixed with 5 parts of ultra fine silica (available as Ultrasil VN3 from Degussa), 30 parts of an ammonium polyphospate/melamine system (available as BUDIT 3078 from Lehman & Voss), 4 parts of titanium dioxide, 0.2 parts of Irganox B225, 0.2 parts of Tinuvin 328, 0.2 parts of Chimasorb 944, 3 parts of a high molecular weight PDMS MB and 0.3 parts of stearic acid. The dry blend is extruded to result in a melt temperature of about 175°C. The melt is transferred to the nip of the calender rolls and coated onto a polypropylene fabric (5.5 * 5.5 threads per cm of PP 1100 dtex from Ibena INTEX 8673, hereinafter called FAB7). An identical second layer is applied onto the other side of the fabric producing a B/A/B structure. The thickness of the total structure is about 0.65 mm.

### Examgle 28

A polymeric coating consisting of two layers is applied to a fabric on a co-extrusion coating line.

The top layer amounts to about 80 percent of the total thickness of the coating. This layer is made of 100 parts of ESI-8, 0.1 parts of Irganox B225 and 0.2 parts of zinc stearate.

The adhesive layer amounts to about 20 percent of the total thickness of the coating. This layer is made of a terpolymer of ethylene/methacrylic acid/glycidyl methacylate, available as Lotader AX8900 from Elf Atochem.

The top layer is extruded in a 2½-inch (2.5" in) extruder at about 200°C. The adhesive layer is extruded in a 2-inch extruder at about 200°C. The extruders are combined with a feed-block to a coat hanger die of 712 mm width and 1.5 mm gap which is also set at a temperature of about 200°C. The melt is extruded onto a woven polyester fabric FAB5 on heated rolls of a temperature above 100°C and is subsequently cooled on another roll set at 20°C. The total thickness of the polymeric coating is about 0.6 mm.

The multilayer structures produced according to Examples 25 to 28 are particularly useful as tarpaulins. The multilayer structures may be subjected to a finishing step, such as corona, flame or emboss treatment, or applying a lacquer, and/or printing.

### Example 29

A three-layer polymeric coating is applied onto a fabric on a co-extrusion coating line. The top layer and the middle layer are each about 40 percent and the adhesive layer is about 20 percent of the total coating.

The top layer comprises a blend of 70 parts of ESI-2, 30 parts of a high density polyethylene (HDPE) with an MI of 4 g/10 minutes and a density of 955 kg/m³. This blend is mixed with 3 parts of PDMS MB, 2 parts of Silcat VS 758/0, 4 parts of ATH, 0.2 parts of Irganox B225, 0.2 parts of Tinuvin 328 and 0.2 parts of Chimasorb 944.

The middle layer comprises the same types and amounts of ESI and HDPE as the top layer, 2.5 parts of Silcat VS 758/0, 5 parts of ATH, 5 parts of Polyplast PC 7301 LD, 3.5 parts of an azodicarbonamide masterbatch in polyethylene (foaming agent, commercially available as LUVOPOR 9241 from Lehman & Voss), 0.2 parts of Irganox B225 and 0.5 parts of zinc oxide.

The adhesive layer is made of a terpolymer of ethylene/methacrylic acid/glycidyl methacylate, available as Lotader AX8900 from Elf Atochem.

The top and middle layers are extruded in 2½-inch extruders at about 200°C. The adhesive layer is extruded in a 2-inch extruder at about 200°C. A melt is produced and extruded onto a woven viscose fabric FAB1 as described in Example 28. The thickness of the three-layer polymeric coating including the foamed middle layer is about 1.5 mm. The coated fabric is useful as artificial leather.

### Examples 30 through 33: Upholstery

### Example 30

60 parts of ESI-8, 30 parts of ESI-2 and 10 parts of a high density polyethylene (HDPE) with an MI of 0.2 g/10 minutes and a density of 952 kg/m³ are blended.

The blend is mixed with 30 parts of calcium carbonate, 0.2 parts of ANOX™ BB011, 0.2 parts of Tinuvin™ 328, 0.2 parts of Tinuvin™ 770 and 0.5 parts of stearic acid.

A melt is prepared from the formulation as described in Example 25. A continuous melt-strip is cut off and is used to feed a 4-roll calendering line.

The resulting calendered film is coated onto the non-woven polyester fleece FAB3. The polymer layer has a weight of about 250 g/m².

### Example 31

Example 30 is repeated using the following formulation:
68.8 parts of ESI-8, 30 parts of calcium carbonate, 0.2 parts of Irganox B225, 0.3 parts of Tinuvin™ 328, 0.3 parts of Tinuvin™ 770 and 0.4 parts of stearic acid.

### Example 32

A calendered film is produced as in Example 30 from the following formulation:
80 parts of ESI-8, 10 parts of ESI-2 and 10 parts of a linear low density polyethylene (LDPE) with an MI of 1.2 g/10 minutes and a density of 0.923 g/cm³ are blended.

The blend is mixed with 30 parts of calcium carbonate, 0.2 parts of ANOX™ BB011, 0.2 parts of Tinuvin™ 328, 0.2 parts of Tinuvin™ 770 and 0.5 parts of stearic acid.

The resulting calendered film is coated onto the woven polypropylene fabric FAB6. The polymer layer has a weight of about 300 g/m².

### Example 33

Example 32 is repeated using the following formulation:
58.8 parts of ESI-8, 10 parts of the LDPE, 30 parts of calcium carbonate, 0.2 parts of Irganox B225, 0.3 parts of Tinuvin™ 328, 0.3 parts of Tinuvin™ 770 and 0.4 parts of stearic acid.

The coated fabrics obtained in Examples 30 through 33 can be subsequently corona or flame treated, primed, lacquered, embossed and/or printed. The thus produced coated fabrics are particularly useful in upholstery, such marine upholstery or residential upholstery.

### Examples 34 through 37: Embossina Retention

In Examples 34 through 37 the embossing retention of various plaques produced from the polymeric layer (B) in the multilayer structure of the present invention is evaluated.

The polymers and additives used in Examples 34 through 37 are listed in Table IVa below.

**Table IVa**

| **Designation** | **Description** |
|---|---|
| ESI-6 | See Table 1C |
| RCP Eltex P KW 276 | Trademark for random copolymer of propylene and ethylene, produced via a gas phase process; MFR (230°C, 2.16 kg) 25 g/10 min., Tm=140°C |
| RCP Eltex P KS 001 PF | Copolymer of propylene and ethylene as above; MFR (230°C, 2.16 kg) 5.0 g/10 min., Tm=134°C |
| ELITE 5110 | Trademark for Enhanced Polyethylene, MI(190°C, 2.16 kg) 0.85 g/10 min., density 0.926 g/cm³ |
| DOWLEX 5059.01 | Trademark for LLDPE resin, MI(190°C, 2.16 kg) 1.2 g/10 min., density 0.926 g/cm³ |
| Irganox B225 | Trademark for an antioxidant |
| Black MB | 50 percent Carbon Black and 50 percent LDPE |

Polymeric sheets of a thickness of 600 - 650 microns are produced from the formulations listed in Table 4b below as follows:
The components of the formulation are mixed in a laboratory size internal mixer, such as a Wemer & Pfleiderer mixer. The total weight of the formulation is about 800 grams, the mixing temperature is 180°C, and the mixing time is about 15 minutes. The formulation is mixed until the melt temperature reaches about 140°C. Then 200 to 250 grams of this molten mass are milled on a laboratory roll mill (Collin), using the following conditions: roll temperature rear/front at 160/165°C, gap 0.6 to 0.8 mm for mixing and 0.45 to 0.55 mm when removing the sheet from the mill, roll speed about 10 rpm with a friction of - 10 percent, total milling time 10 minutes. The produced sheet is pressed to about 600 microns and embossed using a laboratory press at 50 bar pressure at various temperature settings and embossing times. The embossed sample is cut to plaques of about 100 by 100 mm and put into an oven (100°C/30 minutes). The embossing retention of the heated plaques is visually compared with the embossing of a non-heat-treated reference plaque of the same formulation.

**Table IVb**

| **Example** | **34** | **35** | **36** | **37** |
|---|---|---|---|---|
| Film Gauge (microns) | 550 | 560 | 555 | 530 |

| **Formulation** | | | | |
|---|---|---|---|---|
| ESI-6 | 70 | 70 | 70 | 70 |
| RCP Eltex P KW 276 | | | | 30 |
| RCP Eltex P KS 001 PF | | 30 | | |
| ELITE 5110 | 30 | | | |
| DOWLEX 5059.01 | | | 30 | |
| | | | | |
| Irganox B225 | 0.2 | 0.2 | 0.2 | 0.2 |
| Zinc stearate | 0.3 | 0.3 | 0.3 | 0.3 |
| Calcium carbonate | 10 | 10 | 10 | 10 |
| Black MB | 5 | 5 | 5 | 5 |

| Embossing Retention: | | | | |
|---|---|---|---|---|
| Visual rating (percent retention vs. non-heat-treated reference) | | | | |
| Embossed at 90°C for 30 s | 9 | | | 17 |
| Embossed at 100°C for 30 s | 48 | 60 | 13 | 25 |
| Embossed at 120°C for 30 s | 93 | 96 | 91 | 65 |
| Embossed at 140°C for 30 s | | 99 | 94 | 90 |
| Embossed at 100°C for 15 s | 38 | | | |
| Embossed at 100°C for 5 s | 29 | | | |

Table IVb illustrates the good embossing retention of plaques produced from layer (B) in the multilayer structure of the present invention. A good embossing retention is particularly desirable if the multilayer structures are used as or processed to artificial leather.

### Examples 38-40: Extrusion coating

The polymers and additives used in Examples 38 through 40 are listed in Table V below.

**Table V**

| **Designation** | **Description** |
|---|---|
| ESI-7 | See Table 1 C |
| CPP | Polypropylene impact copolymer, MFR (230°C, 2.16 kg) 12.0 g/10 min., density 900 kg/m³, commercially available from The Dow Chemical Company under the trademark INSPIRE C707-12 |
| LDPE-1 | Low density polyethylene with a MI (190°C, 2.16 kg) of 4.2 g/10 min. and a density of 0.923 g/cm³ |
| LDPE-2 | Low density polyethylene with a MI (190°C, 2.16 kg) of 0.5 g/10 min. and a density of 0.923 g/cm³ |
| TPO | Propylene-ethylene copolymer, commercially available under the trademark Adflex KSO35P from Montell for injection molding, MFR 2.14 kg, 230°C) 9.0 g/10 min., density 0.89 g/cm³, flex modulus 56,000 psi (390 Mpa) |
| TiO₂ MB | 50 percent titanium dioxide in 50 percent LDPE, commercially available as Ampacat 11078 |
| Talc concentrate I | 20 percent talc in 80 percent LDPE, commercially available as Ampacat 100486 |
| Talc concentrate II | 50 percent talc in 50 percent LPPE, commercially available as Ampacet 100807 |

In Examples 38 through 40 coating samples are produced on a Black Clawson co-extrusion coating line that consists of three extruders: the first extruder has a screw diameter of 3½ inch (8.9 cm) and a ratio of screw length to screw diameter (L/D) of 30:1, the second extruder has a screw diameter of 2½ inch (6.4 cm) and a L/D of 24:1 and the third extruder has a screw diameter of 2 inch (5.1 cm) and a UD of 24:1. A 30 inch (76 cm) wide slot die (coat-hanger design) is attached via a Cloren feed-block. The die is deckled to 24 inches (61 cm) and has a 0.02 inch (0.051 cm.) die gap. A 6 inch (15 cm) draw/air gap is set between the die and the nip roll/chill roll contact point. The chill roll temperature is controlled at 45°F (7°C). A standard evaluation condition is 90 rpm (revolutions per minute) on the primary extruder for monolayer coatings.

### Example 38

The polymer compositions I and II listed in Table Via below are run on the extrusion coating line described above and coated onto a tightly woven polyethylene mono-tape substrate. In sample I the molten web is hazy and some web oscillation is observed while the melt is flowing out from the die. In sample II a stable web is observed.

The compositions of the samples and the coating conditions are listed in Table Vla below.

**Table Via**

| Sample | Composition | Rate Ib/hr (kg/hr) | rpm | Ampere | Melt Temp °F (°C) | Pressure psig (Mpa) | Neck-in at 3 mils (76 micron) |
|---|---|---|---|---|---|---|---|
| I | 75 percent ESI-7 + 25 percent CPP | 243 (110) | 85 | 141 | 569 (298) | 2030 (14) | 7.5 |
| II | 75 percent ESI-7 + 25 percent LDPE-1 | 231 (105) | 73 | 140 | 564 (295) | 1520 (10) | 7 |

The coated woven polyethylene mono-tape is heat sealed using a Packforth hot tack machine. At 140°C and 9.9 seconds excellent seal strength is achieved for samples I and II (greater than 25 pounds/inches or greater than 44 N/cm).

The coated substrates are tested for blocking at elevated temperature by placing samples of 4 by 6 inch (10 by 10 cm) between 50 pounds (23 Kg) kraft paper and then stacking them between aluminum blocks of 4 by 4 by 1/2 inch (10 by 10 by 1.3 cm) with a weight of 2000 gram on top. The samples are then placed in an oven at various temperatures for over 6 hours and removed and observed for blocking. The results are listed in Table VIIb.

**Table Vlb**

| Sample | Oven Temp. (°C) | Comments |
|---|---|---|
| I,II | 65 | No blocking, not tacky, no paper adhesion |
| I,II | 70 | Slight blocking, not tacky, no paper adhesion |

It has been observed that the addition of LDPE or propylene copolymer (CPP) reduces blocking. The CPP makes the sample relatively stiff.

Table 6b illustrates that the blends of i) ESI and ii) an LDPE or a propylene copolymer are suitable for coated fabrics applications up to 70°C.

### Example 39

Table 7 below shows three blends that are extrusion coated on the line described above. The blends are coated at a thickness of 5 mil (0.13 mm) onto a polyethylene and polypropylene woven mono-tape fabric.

The melt strengths are determined using a Rheotens unit at 190°C. Adhesion to the polyethylene and polypropylene mono-tape fabrics is evaluated using a 90° T peel test at 10 inches/minutes (25 cm/minutes) on an Instron tensiometer.

**Table VII**

| **Components** | **39-A** | **39-B** | **39-C** |
|---|---|---|---|
| ESI-7 | 63 | 63 | 57 |
| LDPE-1 | 16 | 6 | |
| LDPE-2 | | 10 | 5 |
| 50 percent TiO2 MB | 16 | 16 | 16 |
| Talc cone. I | 5 | 5 | 5 |
| TPO | | | 17 |
| | | | |
| Percent total LDPE | 28 | 28 | 17 |
| Percent ESI less fillers | 69.2 | 69.2 | 62.6 |
| | | | |
| Melt Strength* (cN) | 2.6 | 5.2 | 6.0 |

| **Run Data** | | | |
|---|---|---|---|
| Extruder rpm | 80.1 | 80.1 | 81 |
| Extruder rate, pound/hr (kg/hr) | 264 (120) | 273 (124) | 263 (120) |
| Ampere | 111 | 113 | 119 |
| Pressure, psig | 830 (5.7) | 990 (6.8) | 1030 (7.1) |
| (MPa) | | | |
| Melt Temp, °F | 570 (299) | 578 (303) | 585 |
| (°C) | | | (307) |
| Line speed; ft/min. | 91 | 93 | 88 |
| (m/min.) | (28) | (28) | (27) |
| Neck-in**, inches | 9 | 7 | 4 |
| (cm) | (23) | (18) | (10) |
| Adhesion to polyethylene substrate, Ib/in | 8 | 5 | 4.5 |
| (N/cm) | (14) | (8.8) | (7.8) |
| Adhesion to polypropylene substrate | 2.1 | 2.1 | 2 |
| Ib/in (N/cm) | (3.7) | (3.7) | (3.5) |
| Comments | USW | SEW | SEW |

| | | | |
|---|---|---|---|
| * Max value obtained USW- Unstable web (but still coatable) SEW- Slight edge weave Neck-in** = deckled die width - coating width | | | |

The results in Table VII illustrate that blends of LOPE and ESl have an excellent coatability and a low neck-in. Example 39-C illustrates that an even lower neck-in can be achieved with a blend of an LDPE, ESI and a polypropylene, such as TPO.

### Example 40

A blend is prepared consisting of 67.82 percent ESI-7, 20 percent TPO, 9.0 percent LDPE-2, 3.0 percent talc concentrate II, 0.06 percent PEPQ (trademark) antioxidant, 0.06 percent Irgafox (trademark) antioxidant and 0.06 percent Cyanox (trademark) antioxidant.

This composition is blended with an additive consisting of 90 percent of LDPE and 10 percent of colorant, commercially available as Spartech BL 13733 Blue (Trademark) and is extrusion coated using the primary extruder described above at a melt temperature of 584°F (307°C) using an extruder profile of 350, 450, 525, 575, 575, 575°F (177, 232, 274, 302, 302, 302°C) with the adapter, feedblock and die also at 575° F (302°C). At 90 rpm, the composition is coated onto 50 pound (34 Kg) Kraft paper at a rate of 282 pounds/hour (128 kg/hour). The coating, when drawn down to 1 mil. (25.4 micrometer) at a line speed of 440 ft./minute. (134 m/minute.) has a neck-in of 4.25 inches (10.8 cm). A sample of a loosely woven polyester scrim, commercially available from Highland Industries Inc. under the designation Style 62162 (9 by 9 threads/inch, 1000D) is coated on both sides to make a coated fabric sample. The sample has good haptics and excellent adhesion between both layers through the open scrim. Examples 41 through 45: Footwear

The polymers used in Examples 41 through 45 are listed in Table VIII below.

**Table VIII**

| **Designation** | **Description** |
|---|---|
| ESI-8 | See Table 1 C |
| ESI-6 | See Table 1C |
| STYRON™ 660 | Polystyrene with a Melt flow rate (200°C, 5 kg, according to ASTM D-1238/G) 7.0 g/10 min. and a specific density (at 23°C, according to ASTM D-792) of 1050 kg/m³ |

### Example 41

ESI-8 is fed directly into a 120 mm single-screw extruder with a screw length to screw diameter ratio UD of 35.

Polymeric sheets with a thickness of 750 micrometers are extruded using a temperature profile for the extruder (feed to die) going from 80°C at the feed zone to 230°C at the feedblock. The die of 1600 mm with has a flat temperature profile of 220°C to 240°C and a gap of 0.4 mm.

The measured melt temperature is between 190 and 220°C with a pressure of 100 to 150 bars at 60 rpm extrusion rate and an output of about 400 Kg/hour.

The melt is laminated on line on both the upper and lower surface with a polyester (PET) non-woven tissues of 40 g/m² weight before passing through 5 calendering rolls. The first two rolls are cooled to 25°C.

The multilayer structure shows a Frank bending stiffness, measured according to DIN 53121, of 4 Nmm in machine direction and 1.3 Nmm in cross direction. Adhesion to the PET non-woven fabric is higher than 1.7 N/mm without the use of any primer or adhesive.

The produced sheet has an excellent balance between flexibility and elastic recovery. It is particularly useful as a reinforcing material for the toe section and the heel section of shoes.

### Example 42

85 weight parts of ESI-8 are dry blended with 15 weight parts of STYRON 660 polystyrene. The blend is processed as described in Example 41 to produce a polymeric sheet with a thickness of 750 micrometers.
The multilayer structure shows a Frank bending stiffness, measured according to DIN 53121, of 5.9 Nmm in machine direction and 1.5 Nmm in cross direction. Adhesion to the PET non-woven fabric described in Example 41 is 1.6 N/mm without the use of any primer or adhesive.

### Example 43

Example 42 is repeated, except that 75 weight parts of ESI-8 are dry blended with 25 weight parts of STYRON 660 polystyrene. The multilayer structure shows a bending stiffness, measured according to DIN 53121, of 6.3 Nmm in machine direction and 2.1 Nmm in cross direction. Adhesion to the PET non-woven fabric is 1.5 N/mm without the use of any primer or adhesive.

### Example 44

ESI-6 is processed to polymeric sheets with a thickness of 2000 micrometers as described in Example 41.

The melt is laminated on line on both the upper and lower surface with a polyester (PET) non-woven tissues of 40 g/m² weight before passing through 5 calendering rolls. The first two rolls are cooled to 25°C.

The multilayer structure shows a Frank bending stiffness, measured according to DIN 53121, of 3.8 Nmm in machine direction.

### Examples 45

Example 42 is repeated, except that ESI-8 is blended with 15 percent, 20 percent, 25 percent, 30 percent, 35 percent or 40 percent respectively of a polypropylene or a Linear Low density polyethylene (LLDPE), based on the total polymer weight. Sheets of a thickness between 0.1 and 3 mm are prepared; the preferred sheet thickness is between 0.3 to 2 mm. The sheets are cut and thermoformed to reinforcing materials for the toe section and the heel section of shoes.

### Examples 46-52

In Examples 46-51 fabrics are coated with polymeric layers using an adhesive as an intermediate layer. In Example 52 no adhesive layer is used. The components of the polymeric coating layers and the types of fabrics used in Examples 46-52 are listed in Table 9 below.

**Table IX**

| **Designation** | **Description** |
|---|---|
| ESI-8 | See Table 1C |
| ESI-6 | See Table 1C |
| Eltex P276 (Trademark) | A random propylene copolymer with a MI (230°C, 2.16 kg) of 25 and a melting point of 144°C |
| HDPE 53050 | high density slurry polyethylene, density 0.950 g/cm³, MI 0.2 g/10 min. |
| Silica KF320 | Trademark for silica gel, commercially available from Degussa, specific surface area 175 m²/g |
| EPA 25 DC | Poly(dimetyl siloxane), high molecular weight silicone masterbatch, commercially available from Dow Corning |
| Omyalite 50 (Trademark) | A natural non-surface-treated calcium carbonate from Omya with an average particle size of 2 micrometer |
| Zinc stearate | Zinc stearate |
| Titanium dioxide | Available as Kronos 2220 (trademark) |
| ATH | Aluminum trihydrate, available from Martinswerke (grade 104) |
| Irganox B225 | Trademark for an antioxidant |
| Chimassorb 944 | Trademark for a light stabilizer |
| Whitestar N (Trademark) | antimone trioxide, commercially available from Campine |
| Saytex 8010 (Trademark) | Brominated aromatic compound, commercially available from Albemarle |
| FAB5 | Technical Polyester, 196 g/m²; Threads per cm: Warp 9 / Fill 9, PET >1100 dtex |
| FAB7 | Technical Polyester, 330 g/m²; Warp yarn 1100 dtex multi, Weft yarn 680 dtex mono, 0.25 mm 680 dtex mono, 0.25 mm Warp piks 21,5 weft piks 9,5 1/1 plain |
| FAB8 | Technical Polyester, 330 g/m²; Warp yarn 1100 dtex multi, Weft yarn 680 dtex mono, 0.25 mm 680 dtex mono, 0.25 mm Warp piks 22 weft piks 11.2 3/1 twill |

### Preparation of Adhesive ADH-1

A commercially available grafted substantially linear ethylene polymer having a density of 0.869 g/cm³ and a melt index of 1.3 g/10 minutes is used which is commercially available from DuPont as Fusabond MN 493D ethylene-1-octene copolymer comprising 0.5 weight percent of grafted maleic anhydride. 88 parts of xylene and 12 parts of the grafted substantially linear ethylene polymer are mixed and heated to 60°C for 4 hours in a closed container. The solution is allowed to cool to room temperature.

100 parts of the solution are blended with 5 parts of Desmodur RFE (trademark of Bayer for a 20 weight percent solution of a multifunctional isocyanate prepolymer).

### Preoaration of Adhesive ADH-2

ADH-2 is prepared in the same manner as ADH-1, except that its viscosity is reduced by the addition of 5 parts of methyl ethyl ketone.

### Preparation of Adhesive ADH-3

ADH-3 is prepared in the same manner as ADH-2, except that the substantially linear ethylene polymer is grafted with 1 weight percent of maleic anhydride. The grafted polymer is commercially available from DuPont as Fusabond MN 494D ethylene-1-octene copolymer.

### Preparation of Adhesive ADH-4

A grafted substantially linear ethylene polymer is used which is commercially available from DuPont as Fusabond MN 494D ethylene-1-octene copolymer comprising 1 weight percent of grafted maleic anhydride. 88 parts of xylene and 12 parts of the grafted substantially linear ethylene polymer are mixed and heated to 60°C for 4 hours in a closed container. The solution is allowed to cool to room temperature. The solutions is used as such as an adhesive.

### Coating Procedure for Examples 46-49 and 51:

The adhesive is applied onto a polyester technical fabric using a free doctor knife followed by a drying oven set at 130°C to 140°C to 150°C for individual sections of 2 m length. The line speed of this oven is 2 m/minute meaning a drying time of 3 minutes. The completely dry primed fabric is wound on a roll. The amount of the dry adhesive is 10 to 20 g/m².

The primed fabric is then coated with the polymeric layer described in Table X below and on the Calender coating line described in Examples 1 through 14 above. The compound is extruded at 186°C melt temperature and roll set temperatures of 174°C and 180°C using 30 percent friction at 3.2 m/minutes resulting in approximately 500 g/m² polymeric coating onto the primed fabric.

The sample is then allowed to cold-cure for more than a week before the delamination force is tested. The delamination force is tested according to DIN 53357A on test strips of 50 mm by 200 mm at a test speed of 100 m/minutes.

### Coating Procedure for Examiple 50

The coating procedure is as described for Examples 46 through 49, except that the fabric is primed on both sides with ADH-3, and subsequently coated with the polymeric layer described in Table X on the calender coating line to result in a total thickness of 750 gram/m². The primed fabric weighs 206 grams/m² meaning a dry primer layer of about 5 g/m² on both sides.

### Coating procedure for Example 52

No adhesive is used to prime the fabric. The fabric is laminated in a press at 180°C for 5 minutes with the polymeric layer described in the following Table 10 which has been prepared on a two-roll mill at 160°C and which has a thickness of about 300 micrometer.

**Table X**

| **Example** | **46** | **47** | **48** | **49** | **50** | **51** | **52** |
|---|---|---|---|---|---|---|---|
| **Composition of polymeric layer (weight parts)** | | | | | | | |
| | | | | | | | |
| ESI-8 | 0.971 | 0.786 | | | 0.043 | 0.043 | 0.971 |
| ESI-6 | | | 0.786 | 0.671 | 0.465 | 0.465 | |
| Eltex P276 | | | | | 0.028 | 0.028 | |
| HDPE 53050 | | 0.1 | 0.1 | | | | |
| Silica FK320 | | 0.05 | 0.05 | | | | |
| Titanium dioxide | 0.02 | 0.02 | 0.02 | 0.02 | 0.011 | 0.011 | 0.02 |
| EPA 25 DC | | 0.04 | 0.04 | | | | |
| ATH | | | | 0.3 | | | |
| Omyalite 50 | | | | | 0.276 | 0.276 | |
| Irganox B225 | 0.002 | 0.002 | 0.002 | 0.002 | 0.001 | 0.001 | 0.002 |
| Chimasorb 944 | 0.002 | 0.002 | 0.002 | 0.002 | 0.002 | 0.002 | 0.002 |
| Zink stearate | 0.005 | | | 0.005 | 0.003 | 0.003 | 0.005 |
| Whitestar N | | | | | 0.043 | 0.043 | |
| Sayex 8019 | | | | | 0.129 | 0.129 | |
| | | | | | | | |
| **Fabric** | FAB7 | FAB7 | FAB8 | FAB5 | FAB5 | FAB5 | FAB5 |
| | | | | | | | |
| **Adhesive** | ADH-1 | ADH-2 | ADH-3 | ADH-3 | ADH-3 | ADH-4 | None |
| **Delamination force (N/mm)** | 2.15 | 3.78 | Too high* | Too high* | Too high* | 0.58 | 0.60 |

Too high to be measurable, the adhesion is higher than the strength of the polymeric coating layer.

## Claims

1. A multilayer structure having a drape angle of 35.5 degrees or greater, and comprising
(A) a woven or non-woven fabric made of natural or man-made fibers selected from wool, cotton, silk, linen, regenerated cellulose, cellulose acetate, a polyamide, an acrylonitrile homo- or copolymer, a polyethylene glycol terephthalate, a polyester, a polyolefin, or a mixture thereof and
(B) a polymeric layer comprising a substantially random interpolymer comprising in polymerized form i) one or more α-olefin monomers and ii) one or more vinyl or vinylidene aromatic monomers and/or one or more sterically hindered aliphatic or cycloaliphatic vinyl or vinylidene monomers, and optionally iii) other polymerizable ethylenically unsaturated monomer(s); layer (B) being free from a substantial amount of tackifier.

2. The multilayer structure of claim 1 wherein the fabric (A) is smooth and tightly woven.

3. The multilayer structure of claim 1 or claim 2 wherein an adhesive layer is located between the fabric (A) and the polymeric layer (B).

4. The multilayer structure of claim 3 wherein the adhesive is a combination of I) an ethylene polymer having grafted thereto an unsaturated carboxylic acid or an anhydride, ester, amide, imide or metal salt thereof and II) an isocyanate compound or isocyanate prepolymer.

5. The multilayer structure of claim 1 wherein the fabric (A) is non-woven, roughened or loosely woven.

6. The multilayer structure of claim 1 or claim 5 wherein no adhesive layer is located between the fabric (A) and the polymeric layer (B).

7. The multilayer structure of any one of claims 1 to 6 wherein said substantially random interpolymer contains interpolymerized
(i) from 35 to 99.5 mole percent of one or more α-olefin monomers and
(ii) from 65 to 0.5 mole percent of one or more vinyl or vinylidene aromatic monomers and/or one or more sterically hindered aliphatic or cycloaliphatic vinyl or vinylidene monomers, and
optionally iii) other polymerizable ethylenically unsaturated monomer(s).

8. The multilayer structure of any one of Claims 1 to 7 wherein said substantially random interpolymer has a melt index I₂ of from 0.1 to 10 g/10 minutes.

9. The multilayer structure of any one of Claims 1 to 8 wherein said substantially random interpolymer is an interpolymer of ethylene and styrene or an interpolymer of ethylene, styrene and at least one α-olefin containing from 3 to 8 carbon atoms.

10. The multilayer structure of any one of Claims 1 to 9 wherein the polymeric layer (B) comprises up to 40 weight percent of one or more further polymeric components, based on the total weight of the polymeric layer (B).

11. The multilayer structure of Claim 10 wherein said one or more further polymeric components are one or more monovinyl aromatic polymers, monovinylidene aromatic polymers, styrenic block copolymers and homopolymers, interpolymers of aliphatic α-olefins having from 2 to 20 carbon atoms, interpolymers of α-olefins having from 2 to 20 carbon atoms and containing polar groups, or blends thereof.

12. The multilayer structure of Claim 10 wherein said one or more further polymeric components are one or more substantially linear olefin polymers, ethylene-vinyl acetate polymers, low density polyethylenes, linear low density polyethylenes, medium density polyethylenes, high density polyethylenes, or blends thereof.

13. The multilayer structure of Claim 10 wherein said further polymeric component is a propylene homopolymer or interpolymer, a low density polyethylene or a blend thereof.

14. A method of producing the multilayer structure of any one of Claims 1 to 13 which comprises the step of fixing a polymeric layer comprising a substantially random interpolymer comprising in polymerized form i) one or more α-olefin monomers and ii) one or more vinyl or vinylidene aromatic monomers and/or one or more sterically hindered aliphatic or cycloaliphatic vinyl or vinylidene monomers, and optionally iii) other polymerizable ethylenically unsaturated monomer(s) to a fabric.

15. Water-impermeable goods made of the multilayer structure of any one of Claims 1 to 13.

16. The water-impermeable goods of claim 15 selected from water-impermeable clothes, tablecloths, tents, water-impermeable covers, conveyer belts, textile constructions, wall coverings, roofing materials, curtains, banners, inflatable goods, artificial leather, container bags, upholstery, shoes, purses or handbags.

## Patentansprüche

1. Mehrschichtige Struktur, die einen Fallwinkel von 35,5 Grad oder mehr aufweist, umfassend
(A) einen gewebten oder nicht gewebten, aus natürlichen oder Kunstfasern hergestellten Stoff, ausgewählt aus Wolle, Baumwolle, Seide, Leinen, regenerierter Cellulose, Celluloseacetat, einem Polyamid, einem Acrylnitril-Homopolymer oder -Copolymer, einem Polyethylenglykolterephthalat, einem Polyester, einem Polyolefin oder einem Gemisch davon und
(B) eine Polymerschicht, umfassend ein im Wesentlichen statistisches Interpolymer, umfassend in polymerisierter Form i) ein oder mehrere α-Olefinmonomere und ii) ein oder mehrere aromatische Vinyl- oder Vinylidenmonomere und/oder ein oder mehrere sterisch gehinderte aliphatische oder cycloaliphatische Vinyl- oder Vinylidenmonomere, und gegebenenfalls iii) (ein) weitere(s) polymerisierbare(s) ethylenisch ungesättigte(s) Monomer(e); eine Schicht (B), die frei von einer wesentlichen Menge an Klebrigmacher ist.

2. Mehrschichtige Struktur nach Anspruch 1, wobei der Stoff (A) fein und fest gewebt ist.

3. Mehrschichtige Struktur nach Anspruch 1 oder Anspruch 2, wobei eine Klebeschicht zwischen dem Stoff (A) und der Polymerschicht (B) positioniert ist.

4. Mehrschichtige Struktur nach Anspruch 3, wobei das Klebemittel eine Kombination aus I) einem Ethylenpolymer, auf das eine ungesättigte Carbonsäure oder ein Anhydrid, Ester, Amid, Imid oder Metallsalz davon aufpolymerisiert ist, und II) einer Isocyanatverbindung oder einem Isocyanatpräpolymer ist.

5. Mehrschichtige Struktur nach Anspruch 1, wobei der Stoff (A) nicht gewebt, angeraut oder lose gewebt ist.

6. Mehrschichtige Struktur nach Anspruch 1 oder Anspruch 5, wobei zwischen dem Stoff (A) und der Polymerschicht (B) keine Klebeschicht positioniert ist.

7. Mehrschichtige Struktur nach einem der Ansprüche 1 bis 6, wobei das im Wesentlichen statistische Interpolymer interpolymerisiert
(i) 35 bis 99,5 Mol-Prozent eines oder mehrerer α-Olefinmonomere und
(ii) 65 bis 0,5 Mol-Prozent einer oder mehrerer aromatischer Vinyl- oder Vinylidenmonomere und/oder einer oder mehrerer sterisch gehinderter aliphatischer oder cycloaliphatischer Vinyl- oder Vinylidenmonomere, und gegebenenfalls
iii) weitere(s) polymerisierbare(s) ethylenisch ungesättigte(s) Monomer (e)
umfasst.

8. Mehrschichtige Struktur nach einem der Ansprüche 1 bis 7, wobei das im Wesentlichen statistische Interpolymer einen Schmelzindex I₂ von 0,1 bis 10 g/10 Minuten aufweist.

9. Mehrschichtige Struktur nach einem der Ansprüche 1 bis 8, wobei das im Wesentlichen statistische Interpolymer ein Interpolymer aus Ethylen und Styrol oder ein Interpolymer aus Ethylen, Styrol und mindestens einem α-Olefin, enthaltend 3 bis 8 Kohlenstoffatome, ist.

10. Mehrschichtige Struktur nach einem der Ansprüche 1 bis 9, wobei die Polymerschicht (B) bis zu 40 Gewichtsprozent einer oder mehrerer weiterer Polymerbestandteile umfasst, beruhend auf dem Gesamtgewicht der Polymerschicht (B).

11. Mehrschichtige Struktur nach Anspruch 10, wobei der eine oder die mehreren weitere(n) Polymerbestandteil (e) ein oder mehrere aromatische Monovinylpolymere, aromatische Monovinylidenpolymere, Styrolblockcopolymere und -homopolymere, Interpolymere aus aliphatischen α-Olefinen mit 2 bis 20 Kohlenstoffatomen, Interpolymere aus α-Olefinen mit 2 bis 20 Kohlenstoffatomen und polaren Gruppen oder Gemische davon sind.

12. Mehrschichtige Struktur nach Anspruch 10, wobei der eine oder die mehreren weiteren Polymerbestandteil (e) ein oder mehrere im Wesentlichen lineare Olefinpolymere, Ethylen-Vinylacetatpolymere, Polyethylene mit niedriger Dichte, lineare Polyethylene mit niedriger Dichte, Polyethylene mit mittlerer Dichte, Polyethylene mit hoher Dichte oder Gemische davon sind.

13. Mehrschichtige Struktur nach Anspruch 10, wobei der weitere Polymerbestandteil ein Propylenhomopolymer oder -interpolymer, ein Polyethylen mit niedriger Dichte oder ein Gemisch davon ist.

14. Verfahren zur Herstellung der mehrschichtigen Struktur nach einem der Ansprüche 1 bis 13, umfassend den Schritt, eine Polymerschicht auf einem Stoff zu befestigen, die ein im Wesentlichen statistisches Interpolymer umfassend in polymerisierter Form i) ein oder mehrere α-Olefinmonomere und ii) ein oder mehrere aromatische Vinyl- oder Vinylidenmonomere und/oder ein oder mehrere sterisch gehinderte aliphatische oder cycloaliphatische Vinyl- oder Vinylidenmonomere und gegebenenfalls iii) weitere (s) polymerisierbare(s) ethylenisch ungesättigte (s) Monomer(e) umfasst.

15. Wasserdichte Waren, hergestellt aus der mehrschichtigen Struktur nach einem der Ansprüche 1 bis 13.

16. Wasserdichte Waren nach Anspruch 15, ausgewählt aus wasserdichter Kleidung, Tischdecken, Zelten, wasserdichten Hüllen, Förderbändern, Textilkonstruktionen, Wandbedeckungen, Bedachungsmaterialien, Vorhängen, Fahnen, aufblasbaren Waren, Kunstleder, Kofferbehälter, Polsterungen, Schuhen, Geldbeutel oder Handtaschen.

## Revendications

1. Structure multicouche présentant un angle de drapé de 35,5° ou plus et comprenant :
A) une étoffe tissée ou non-tissée, en fibres naturelles ou artificielles choisies parmi de la laine, du coton, de la soie, du lin, de la cellulose régénérée, de l'acétate de cellulose, un polyamide, un homopolymère ou copolymère d'acrylonitrile, un poly(éthylène téréphtalate), un polyester et une polyoléfine, ainsi qu'un mélange de ces fibres,
B) et une couche de polymère comprenant un interpolymère sensiblement statistique qui comporte, à l'état polymérisé,
1) un ou plusieurs monomères de type α-oléfine,
2) et un ou plusieurs monomères aromatiques à groupe vinyle ou vinylidène et/ou un ou plusieurs monomères aliphatiques ou cycloaliphatiques à groupe vinyle ou vinylidène et à encombrement stérique,
3) et en option, un autre ou d'autres monomères polymérisables à insaturation éthylénique,
cette couche (B) ne contenant pas d'agent poisseux en quantité appréciable.

2. Structure multicouche conforme à la revendication 1, dans laquelle l'étoffe (A) est lisse et tissée serré.

3. Structure multicouche conforme à la revendication 1 ou 2, dans laquelle il y a une couche d'adhésif placée entre le tissu (A) et la couche de polymère (B).

4. Structure multicouche conforme à la revendication 3, dans laquelle l'adhésif est une combinaison :
I) d'un polymère d'éthylène portant des greffons d'un acide carboxylique insaturé ou d'un anhydride, ester, amide, imide ou sel métallique dérivé d'un tel acide,
II) et d'un isocyanate ou d'un prépolymère isocyanate.

5. Structure multicouche conforme à la revendication 1, dans laquelle l'étoffe (A) est non-tissée, lainée ou tissée lâche.

6. Structure multicouche conforme à la revendication 1 ou 5, dans laquelle il n'y a pas de couche d'adhésif placée entre le tissu (A) et la couche de polymère (B).

7. Structure multicouche conforme à l'une des revendications 1 à 6, dans laquelle ledit interpolymère sensiblement statistique comporte, à l'état interpol ymérisé,
1) de 35 à 99,5 % en moles d'un ou plusieurs monomères de type α-oléfine,
2) et de 65 à 0,5 % en moles d'un ou plusieurs monomères aromatiques à groupe vinyle ou vinylidène et/ou d'un ou plusieurs monomères aliphatiques ou cycloaliphatiques à groupe vinyle ou vinylidène et à encombrement stérique,
3) et en option, un autre ou d'autres monomères polymérisables à insaturation éthylénique.

8. Structure multicouche conforme à l'une des revendications 1 à 7, dans laquelle ledit interpolymère sensiblement statistique présente un indice de fluidité à chaud I₂ de 0,1 à environ 10 g/10 min.

9. Structure multicouche conforme à l'une des revendications 1 à 8, dans laquelle ledit interpolymère sensiblement statistique est un interpolymère d'éthylène et de styrène ou un interpolymère d'éthylène, de styrène et d'au moins une α-oléfine comportant de 3 à 8 atomes de carbone.

10. Structure multicouche conforme à l'une des revendications 1 à 9, dans laquelle la couche de polymère (B) contient un ou plusieurs autres composants polymères, en une quantité qui représente jusqu'environ 40 % du poids total de cette couche de polymère (B).

11. Structure multicouche conforme à la revendication 10, dans laquelle ledit ou lesdits autres composants polymères sont un ou plusieurs polymères de monovinyl-arène, polymères de monovinylidène-arène, homo-polymères ou copolymères séquencés de styrène, interpolymères d'α-oléfines aliphatiques comportant de 2 à 20 atomes de carbone, interpolymères d'α-oléfines comportant de 2 à 20 atomes de carbone et des groupes polaires, ou mélanges de tels polymères.

12. Structure multicouche conforme à la revendication 10, dans laquelle ledit ou lesdits autres composants polymères sont un ou plusieurs polymères d'oléfines sensiblement linéaires, polymères d'éthylène et d'acétate de vinyle, polyéthylènes basse densité, polyéthylènes basse densité linéaires, polyéthylènes moyenne densité, polyéthylènes haute densité ou mélanges de tels polymères.

13. Structure multicouche conforme à la revendication 10, dans laquelle ledit autre composant polymère est un homopolymère ou interpolymère de propylène, un polyéthylène basse densité, ou un mélange de tels polymères.

14. Procédé de production d'une structure multicouche conforme à l'une des revendications 1 à 13, lequel procédé comporte une étape consistant à fixer sur une étoffe une couche de polymère comprenant un interpolymère sensiblement statistique qui comporte, à l'état polymérisé,
1) un ou plusieurs monomères de type α-oléfine,
2) et un ou plusieurs monomères aromatiques à groupe vinyle ou vinylidène et/ou un ou plusieurs monomères aliphatiques ou cycloaliphatiques à groupe vinyle ou vinylidène et à encombrement stérique,
3) et en option, un autre ou d'autres monomères polymérisables à insaturation éthylénique.

15. Articles imperméables à l'eau, faits d'une structure multicouche conforme à l'une des revendications 1 à 13.

16. Articles imperméables à l'eau, conformes à la revendication 15, choisis parmi les vêtements imperméables à l'eau, nappes, tentes, couvertures imperméables à l'eau, courroies transporteuses, structures textiles, revêtements muraux, matériaux de toiture, rideaux, banderoles, articles gonflables, articles en cuir artificiel, sacs, garnitures d'automobile, chaussures, porte-monnaie et portefeuilles, et pochettes et sacs à main.
